(19) **Europäisches Patentamt / European Patent Office / Office européen des brevets**

(11) **EP 4 647 310 A1**

(12) **EUROPEAN PATENT APPLICATION**
published in accordance with Art. 153(4) EPC

(43) Date of publication:
**12.11.2025 Bulletin 2025/46**

(21) Application number: **23914724.2**

(22) Date of filing: **22.11.2023**

(51) International Patent Classification (IPC):
**B60W 30/10** (2006.01)   **B60W 30/182** (2020.01)
**B60W 40/04** (2006.01)   **B60W 60/00** (2020.01)
**G01C 21/34** (2006.01)   **G08G 1/16** (2006.01)

(52) Cooperative Patent Classification (CPC):
**B60W 30/10; B60W 30/182; B60W 40/04;
B60W 60/00; G01C 21/34; G01C 21/36; G08G 1/16**

(86) International application number:
**PCT/JP2023/042059**

(87) International publication number:
**WO 2024/147236 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023 JP 2023000104**

(71) Applicant: **Astemo, Ltd.**
**Chiyoda-ku,**
**Tokyo 1000004 (JP)**

(72) Inventors:
• **INABA, Ryo**
**Tokyo 100-8280 (JP)**
• **TOYODA, Hidehiro**
**Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **VEHICLE CONTROL DEVICE AND VEHICLE CONTROL METHOD**

(57)   The present invention includes a recognition unit that recognizes the surrounding situation on the basis of a detection result of an external sensor; a travel trajectory generation unit that generates a travel trajectory from a current position to a target position on the basis of the recognition by the recognition unit; and a transition-permitting position determination unit that determines a transition-permitting position at which a transition from an autonomous driving mode to a manual driving mode is possible during execution of a driving task in the autonomous driving mode. The travel trajectory generation unit generates a first travel trajectory which is a travel trajectory from the current position to the target position and a second travel trajectory which is a travel trajectory from a point on the first travel trajectory to the transition-permitting position.

[FIG. 7]

FIG. 7

## Description

Technical Field

The present invention relates to a vehicle control device and a vehicle control method.

Background Art

In recent years, autonomous driving technology in vehicles such as automobiles has been developed. In performing autonomous driving, the road traveled does not always have an appropriate road width.

For example, in the case of a narrow road having a narrow traveled road width, i.e., a road where it is difficult for a host vehicle and an oncoming vehicle to pass each other, it is necessary to perform control different from control during normal travel in order to seek refuge in a place where the host vehicle and the oncoming vehicle can pass each other.

PTL 1 describes a technique for planning maneuvers such as starting, stopping, and the direction of travel of the host vehicle in order to control the host vehicle so that same returns to the entrance of a narrow road in a case where the host vehicle is traveling on a road where there is no passing space.

Citation List

Patent Literature

PTL 1: JP 2018-151177 A

Summary of Invention

Technical Problem

With conventionally proposed autonomous driving technology, in a case where self-driving is performed at the time vehicles are to pass each other on a narrow road in an urban area or the like, it is sometimes determined that control is impossible due to the presence of a sensor blind spot after the start of evasive travel. In such a case, a control device determines that the autonomous driving cannot be performed and surrenders control. When the control device surrenders control, the authority is transferred to the driver from the point where the control device surrenders control; however, there are cases where it is difficult for the driver to travel or where the driver is unable to drive even manually. In addition, even if the autonomous driving continues, there is a possibility that the vehicle will be unable to exit the parking slot when entering the turnout and surrender control. As a result, the ride comfort and convenience of the vehicle may deteriorate.

The present invention was conceived in view of the above circumstances, and an object of the present invention is to provide a vehicle control device and a vehicle control method that enable autonomous driving to be continued as appropriate when vehicles pass each other while traveling on a narrow road or the like.

Solution to Problem

In order to solve the above problem, the configuration set forth in the claims, for example, is adopted.

The present application includes a plurality of means for solving the above problem, and an example thereof is applied to a vehicle control device that controls a vehicle capable of transitioning between an autonomous driving mode in which a vehicle system performs at least some or all driving tasks and a manual driving mode in which a driver or a remote supervisor performs the driving tasks.

The vehicle control device includes a recognition unit that recognizes a situation around the vehicle on the basis of a detection result of an external sensor provided to the vehicle; a travel trajectory generation unit that generates a travel trajectory from a current position of the vehicle to a target position on the basis of the situation around the vehicle recognized by the recognition unit; and a transition-permitting position determination unit that determines a transition-permitting position at which a transition from the autonomous driving mode to the manual driving mode is possible during execution of a driving task in the autonomous driving mode.

Here, the travel trajectory generation unit generates a first travel trajectory which is a travel trajectory of the vehicle from the current position to the target position and a second travel trajectory which is a travel trajectory from a point on the first travel trajectory to a transition-permitting position, and controls the vehicle by using the first travel trajectory or the second travel trajectory.

Advantageous Effects of Invention

According to the present invention, in a case where it is determined that the automatic passing travel is impossible, it is possible to plan an appropriate backup trajectory and continue the autonomous driving.

Problems, configurations, advantageous effects other than those described above will be clarified by the following descriptions of the embodiments.

Brief Description of Drawings

[FIG. 1] FIG. 1 is a block diagram illustrating a configuration example of a travel drive system and a sensor of a vehicle equipped with a vehicle control device according to a first embodiment of the present invention.

[FIG. 2] FIG. 2 is a block diagram illustrating an example of a configuration of a vehicle control device according to a first embodiment of the present invention.

[FIG. 3] FIG. 3 is a block diagram illustrating a configuration example of a residual risk map generation unit of the vehicle control device according to the first embodiment of the present invention.

[FIG. 4] FIG. 4 is a flowchart illustrating an example of residual risk map generation processing by the vehicle control device according to the first embodiment of the present invention.

[FIG. 5] FIG. 5 is a diagram illustrating an example (FIG. 5A: Example 1, FIG. 5B: Example 2) of passing travel during travel on a narrow road by means of the vehicle control device according to the first embodiment of the present invention.

[FIG. 6] FIG. 6 is a block diagram illustrating a configuration example of a vehicle driving planning unit of the vehicle control device according to the first embodiment of the present invention.

[FIG. 7] FIG. 7 is a block diagram illustrating a configuration example of a passing trajectory planning unit of the vehicle control device according to the first embodiment of the present invention.

[FIG. 8] FIG. 8 is a flowchart illustrating an example of standby position/posture generation processing by the vehicle control device according to the first embodiment of the present invention.

[FIG. 9] FIG. 9 is a diagram illustrating an example of control of a vehicle stop position/posture by means of the vehicle control device according to the first embodiment of the present invention.

[FIG. 10] FIG. 10 is a flowchart illustrating an example of processing to generate a passing trajectory by the vehicle control device according to the first embodiment of the present invention.

[FIG. 11] FIG. 11 is a diagram illustrating an example of an end position candidate by means of the vehicle control device according to the first embodiment of the present invention.

[FIG. 12] FIG. 12 is a diagram illustrating an example of a passing trajectory by means of the vehicle control device according to the first embodiment of the present invention.

[FIG. 13] FIG. 13 is a diagram illustrating an example (FIG. 13A is an example before entering a passing trajectory, and FIG. 13B is an example of a passing trajectory) of the movement of the vehicle and the planned passing trajectory by means of the vehicle control device according to the first embodiment of the present invention.

[FIG. 14] FIG. 14 is a diagram illustrating an example (FIG. 14A: Example of generating a cooperative maneuver trajectory, FIG. 14B: Example of not being able to follow a cooperative maneuver trajectory) of the movement of the vehicle and the planned backup trajectory by means of the vehicle control device according to the first embodiment of the present invention.

[FIG. 15] FIG. 15 is a flowchart illustrating an example of driver switch position generation processing at the time the vehicle control device according to the first embodiment of the present invention surrenders control.

[FIG. 16] FIG. 16 is a flowchart illustrating an example of backup trajectory generation processing at the time the vehicle control device according to the first embodiment of the present invention surrenders control.

[FIG. 17] FIG. 17 is a block diagram illustrating a configuration example of a travel mode management unit of the vehicle control device according to the first embodiment of the present invention.

[FIG. 18] FIG. 18 is a diagram illustrating an example (FIG. 18A: Example of movement of vehicle, FIG. 18B: Example of backup trajectory) of the movement of the vehicle and the planned backup trajectory by means of the vehicle control device according to a second embodiment of the present invention.

[FIG. 19] FIG. 19 is a diagram illustrating an example (FIG. 19A: example of trajectory, FIG. 19B: example of driver change position) of a driver switch position at the time the vehicle control device according to the second embodiment of the present invention surrenders control.

[FIG. 20] FIG. 20 is a diagram illustrating an example (FIG. 20A: Example 1, FIG. 20B: Example 2, FIG. 20C: Example 3) of the movement of the vehicle by means of the vehicle control device and the detection range of an on-board sensor according to a third embodiment of the present invention.

[FIG. 21] FIG. 21 is a diagram illustrating an example (FIG. 21A: Example 1, FIG. 21B: Example 2) of the movement of the vehicle and the planned backup trajectory by means of the vehicle control device according to the third embodiment of the present invention.

[FIG. 22] FIG. 22 is a flowchart illustrating an example of backup trajectory generation processing at the time the vehicle control device according to the third embodiment of the present invention surrenders control.

Description of Embodiments

<First Embodiment>

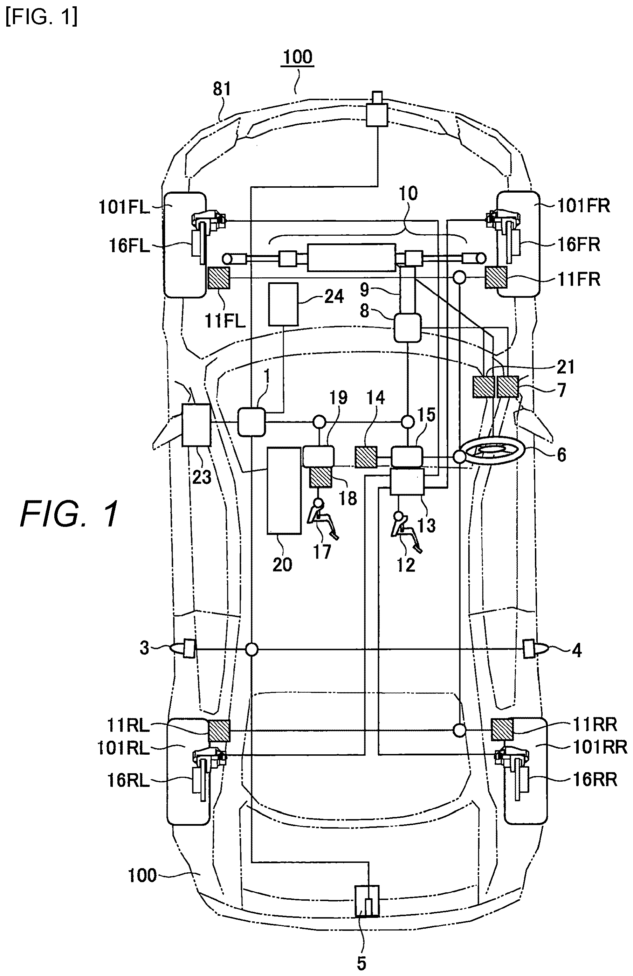

Hereinafter, a vehicle control device and a vehicle control method according to a first embodiment of the present invention will be described with reference to FIGS. 1 to 17.

[Configuration of Vehicle]

FIG. 1 illustrates an overall configuration of a vehicle 100 equipped with a vehicle control device 1 according to a first embodiment of the present invention. The vehicle 100 is autonomously driven under the control of the vehicle control device 1.

As illustrated in FIG. 1, the vehicle 100 includes a front left wheel 101FL, a front right wheel 101FR, a rear left wheel 101RL, and a rear right wheel 101RR.

The vehicle 100 includes, as sensors for recognizing the outside world, a front recognition sensor 2, a left side recognition sensor 3, a right side recognition sensor 4, and a rear recognition sensor 5, and is capable of detecting a relative distance and a relative speed between the host vehicle and surrounding vehicles. Information (detection signals) of these sensors 2, 3, 4, and 5 is supplied to the vehicle control device 1.

The vehicle control device 1 calculates command values to a steering control mechanism 10, a brake control mechanism 13, and a throttle control mechanism 20 for controlling the direction of travel of the vehicle 100 on the basis of the information of the sensors 2, 3, 4, and 5. In addition, the vehicle 100 includes a steering control device 8 that controls the steering control mechanism 10 on the basis of a command value from the vehicle control device 1 and a braking control device 15 that controls the brake control mechanism 13 on the basis of a command value from the vehicle control device 1 and adjusts the braking force distribution of each wheel. Furthermore, the vehicle 100 includes an acceleration control device 19 that controls the throttle control mechanism 20 on the basis of a command value from the vehicle control device 1 to adjust the torque output of the engine, and a display device 24 that displays a travel plan of the vehicle 100, a prediction of the maneuver of a moving object present in the surrounding area, and the like.

Furthermore, the vehicle 100 includes a communication device 23 that performs road-to-vehicle or vehicle-to-vehicle communication. Note that the sensor configuration illustrated in FIG. 1 is an example, and is not limited to the example of FIG. 1. The type of the sensor may also be configured by various sensors such as an ultrasonic sensor, a stereo camera, an infrared camera, a laser, and a LiDAR, or a combination of these sensors.

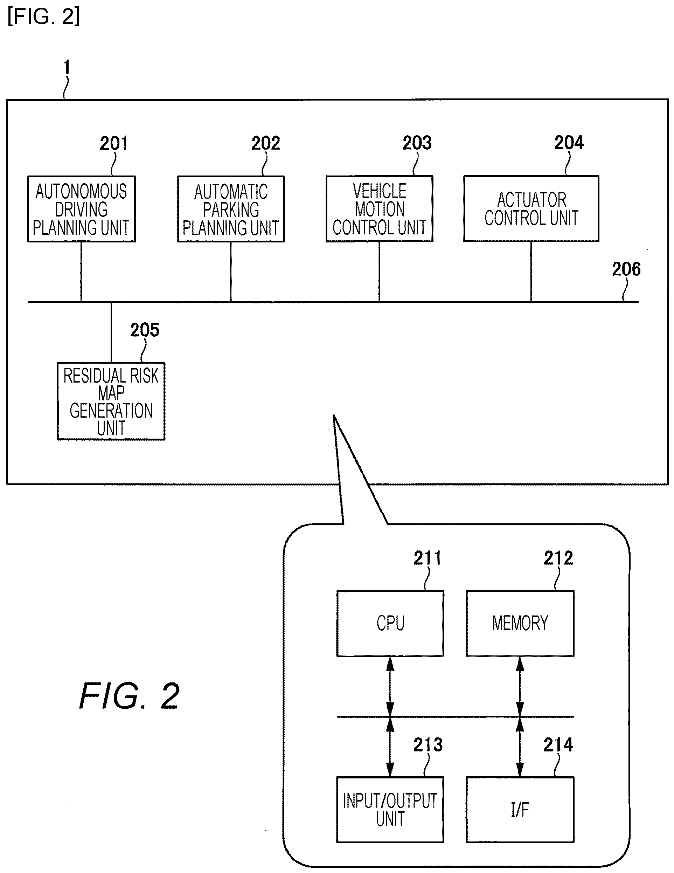

As described below with reference to FIG. 2, the vehicle control device 1 is configured as an arithmetic operation device that includes, for example, a central processing unit (CPU), a memory, and the like. The vehicle control device 1 then stores a program for performing vehicle travel control processing, and generates a travel plan by executing the program. The vehicle control device 1 computes command values of each of actuators 10, 13, and 20 for controlling the vehicle travel according to the generated travel plan. The control devices 8, 15, and 19 of the actuators 10, 13, and 20 receive, through communication, the command values of the vehicle control device 1, and control the actuators on the basis of the command values.

The configuration for operating the brakes illustrated in FIG. 1 will now be described. In a state where a driver is driving, a pedal force generated when the driver steps on a brake pedal 12 is boosted by a brake booster (not illustrated), and a corresponding hydraulic pressure is generated by a master cylinder (not illustrated). The generated hydraulic pressure is supplied, via the brake control mechanism 13, to 16FL, 16FR, 16RL, and 16RR which are arranged on the wheels 101FL to 101RR, respectively.

The wheel cylinders 16FL to 16RR include a cylinder, a piston, a pad, and the like. The piston is propelled by the hydraulic fluid supplied from the master cylinder 9, and the pad connected to the piston is pressed against a disk rotor. Note that the disk rotor rotates together with the wheel constituting each of the wheels 101FL to 101RR. Therefore, the brake torque acting on the disk rotor becomes a braking force acting between the wheel and the road surface. With the above configuration, the braking force can be generated in each wheel in response to a brake pedal operation by the driver.

Similarly to the vehicle control device 1, the braking control device 15 is configured as an arithmetic operation device that includes, for example, a CPU, a memory, and the like. The braking control device 15 receives inputs from a combination sensor 14 capable of detecting longitudinal acceleration, lateral acceleration, and yaw rate, wheel speed sensors 11FL to 11RR installed on the wheels, receives a braking force command from the braking control device 15, and a sensor signal from a steering-wheel angle detection device 21 via the steering control device 8 described below. The output of the braking control device 15 is connected to a brake control mechanism 13 having a pump and a control valve, and can generate an arbitrary braking force on each wheel independently of the brake pedal operation of the driver.

The braking control device 15 plays a role in estimating the spin, the drift-out, and the lock of the wheel of the vehicle on the basis of sensor signal inputs, and generating the braking force of the corresponding wheel so as to suppress the spin, the drift-out, and the lock of the wheel and thus enhance the steering stability of the driver. In addition, the vehicle control device 1 sends a brake command to the braking control device 15 so that an arbitrary braking force can be generated in the vehicle 100, and the vehicle control device 1 plays a role in automatically performing braking in autonomous driving in which no operation by the driver occurs. However, the configuration for braking is not limited to such a configuration, and other actuators such as brake-by-wire may be used.

Next, a configuration for performing a steering operation will be described.

While the driver is driving the vehicle, the steering torque detection device 7 detects the steering torque inputted by the driver via the steering wheel 6, and the steering-wheel angle detection device 21 detects the steering wheel angle. Based on these pieces of information, the steering control device 8 controls the motor to generate an assist torque. Note that the steering control device 8 is also configured as an arithmetic operation device that includes, for example, a CPU, a memory, and the like, similarly to the vehicle control device 1.

The steering control mechanism 10 is moved by the resultant force of the steering torque of the driver and the assist torque by the motor, thereby turning the front wheels. Meanwhile, a reaction force from the road surface is transmitted to the steering control mechanism according to the turning angle of the front wheel, and is transmitted to the driver as a road surface reaction force.

The steering control device 8 is capable of generating a torque by means of the motor independently of a steering operation by the driver and of controlling the steering control mechanism 10. Therefore, because the vehicle control device 1 is capable of controlling the front wheels to an arbitrary turning angle by communicating a steering force command to the steering control device 8, the vehicle control device 1 plays a role in automatically performing steering in autonomous driving in which no operation by the driver occurs. However, the present embodiment is not limited to the steering control device 8 illustrated in FIG. 1, and the steering operation may be performed using another actuator such as a steer-by-wire.

Next, the configuration of the accelerator pedal will be described.

The depression amount of the accelerator pedal 17 by the driver is detected by the stroke sensor 18 and inputted to the acceleration control device 19. Similarly to the vehicle control device 1, the acceleration control device 19 is also configured as an arithmetic operation device that includes, for example, a CPU, a memory, and the like.

The acceleration control device 19 adjusts the throttle opening according to the depression amount of the accelerator pedal 17 to control the engine. As a result, the acceleration control device 19 is capable of accelerating the vehicle in response to the driver operating the accelerator pedal. Further, the acceleration control device 19 is capable of controlling the throttle opening independently of the accelerator pedal operation by the driver. Therefore, the vehicle control device 1 is capable of generating an arbitrary acceleration in the vehicle by communicating an acceleration command to the acceleration control device 19, and plays a role in automatically performing acceleration in autonomous driving in which no driver operation occurs.

[Configuration of Vehicle Control Device]

Next, a configuration of vehicle control device 1 that is mounted in the vehicle control system according to the present embodiment and performs automatic driving control will be described with reference to FIG. 2.

As illustrated outside the block illustrated in FIG. 2, the vehicle control device 1 includes a computer that is an information processing device, for example.

That is, the computer serving as the vehicle control device 1 includes a CPU 211 which is a processor, a memory 212, an input/output unit 213, and an interface 214.

As the memory 212, a storage device such as a hard disk drive (HDD) or a solid state drive (SSD) is used in addition to a memory such as a read-only memory (ROM) or a random-access memory (RAM). The memory 212 stores a program enabling operation as the vehicle control device 1 and information such as a driving situation and a history. In addition, processing function units 201 to 205 (described below) is configured in the memory 212 by reading and executing the program under the control of the CPU 211.

The input/output unit 213 performs input processing of information of the sensors 2 to 5 and the like illustrated in FIG. 1, and performs output processing of command values and the like of the actuators 10, 13, and 20.

The interface 214 performs information transmission processing with another information processing device in the vehicle 100 such as the braking control device 15, and performs transmission/reception processing with the outside via the communication device 23 illustrated in FIG. 1.

The processing function units included in the vehicle control device 1 will now be described. The vehicle control device 1 includes an autonomous driving planning unit 201, an automatic parking planning unit 202, a vehicle motion control unit 203, an actuator control unit 204, and a residual risk map generation unit 205. These processing function units 201 to 205 can communicate with each other via a vehicle network 206. In addition to a wired connection, the vehicle network 206 may be wirelessly connected.

The autonomous driving planning unit 201 plans an operation of the host vehicle for autonomously driving the vehicle 100 to the destination.

The automatic parking planning unit 202 plans an operation of the host vehicle for automatically parking the vehicle 100 in a parking space in a parking lot or the like.

The vehicle motion control unit 203 generates a command value for controlling the motion of the vehicle 100 during autonomous driving.

The actuator control unit 204 controls each of the actuators of the engine, brakes, steering, and the like.

The residual risk map generation unit 205 generates a residual risk map of vehicles present in the area around the host vehicle including an oncoming vehicle or the like.

Note that the actuator control unit 204 may be mounted on hardware different from the vehicle control device 1, such as on an engine control controller or a brake control controller.

[Configuration of Residual Risk Map Generation Unit]

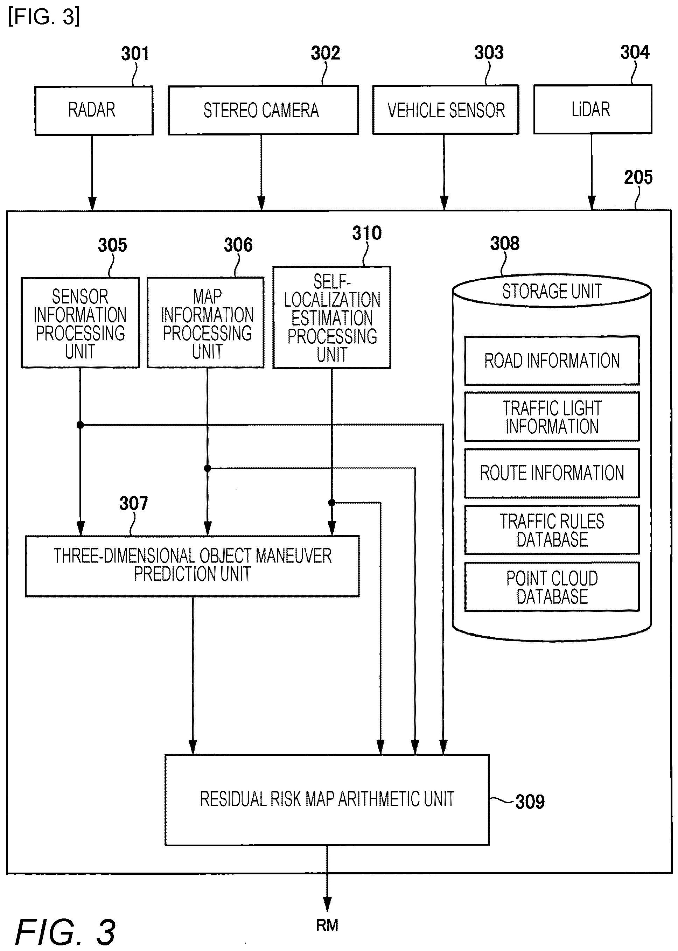

FIG. 3 illustrates a configuration of the residual risk map generation unit 205 of the vehicle control device 1.

Information from a radar 301, a stereo camera 302, a vehicle sensor 303, and a LiDAR 304 is supplied to the residual risk map generation unit 205.

That is, the radar 301 can, as a sensor for recognizing the outside world, measure a distance and a direction to an object by emitting radio waves toward the object and measuring the reflected waves thereby. Information on the distance to the object and the direction obtained by the radar 301 is supplied to the residual risk map generation unit 205.

Furthermore, the stereo camera 302 can obtain information on the depth direction by simultaneously photographing the object from a plurality of different directions. The information on the depth direction obtained by the stereo camera 302 is supplied to the residual risk map generation unit 205.

Furthermore, the vehicle sensor 303 is a sensor for obtaining information regarding the speed of the vehicle and the rotational speed of the tires, information obtained by calculating the average position of the autonomous driving vehicle using a global navigation satellite system (GNSS), destination information inputted by a person occupying the autonomous driving vehicle by using a navigation system as an interface, and destination information specified by an operator or the like at a remote location by using wireless communication such as a telephone line or the like. The information obtained by the vehicle sensor 303 is supplied to the residual risk map generation unit 205.

The LiDAR 304 measures scattered light with respect to laser irradiation emitting pulsed light, and detects a distance to an object located at a long distance. Information on the distance to the object at a long distance obtained by the LiDAR 304 is supplied to the residual risk map generation unit 205.

The residual risk map generation unit 205 includes a sensor information processing unit 305, a map information processing unit 306, a three-dimensional object maneuver prediction unit 307, a storage unit 308, a residual risk map arithmetic unit 309, and a self-localization estimation processing unit 310.

Detected information from external sensors including the radar 301, the stereo camera 302, the vehicle sensor 303, and the LiDAR 304 is inputted to the sensor information processing unit 305. As a result, the sensor information processing unit 305 obtains object information on moving objects present around the host vehicle from the detection information of the external sensors.

As specific object information, attribute information of pedestrians, bicycles, vehicles, and the like, and the current positions and current speed vectors thereof are extracted. Here, the moving objects also include parked vehicles that may move in the future even if the speed obtained at the current time is zero.

The sensor information processing unit 305 functions as a recognition unit that performs recognition processing to recognize the situation around the vehicle 100 on the basis of the information of detection results from external sensors provided to the vehicle.

The storage unit 308 stores road information and traffic light information from a point where the host vehicle starts autonomous driving to a target point and the area around the target point, route information from a current position to the target point, a traffic rule database of sections where the host vehicle travels, and the like. The storage unit 308 also stores a point cloud database used by the self-localization estimation processing unit 310.

The map information processing unit 306 obtains, from the information stored in the storage unit 308, lane center line information and traffic light information of roads necessary for autonomous driving. The map information processing unit 306 then organizes the lighting information and the like of the traffic lights through which the autonomous driving vehicle is scheduled to pass, and places the lane center line information and the traffic light information as information in a format that can be used.

Furthermore, the self-localization estimation processing unit 310 estimates the location where the host vehicle is present on the basis of the information on the surrounding area obtained by the vehicle sensor 303 and the like, the point cloud database, the steering angle of the vehicle, the vehicle speed, and the information obtained by the GNSS.

The output of the sensor information processing unit 305, the output of the map information processing unit 306, and the output of the self-localization estimation processing unit 310 are supplied to the three-dimensional object maneuver prediction unit 307.

The three-dimensional object maneuver prediction unit 307 calculates future position and speed information (object prediction information) of each moving object on the basis of these pieces of input information.

In order to predict the movement of each moving object, the three-dimensional object maneuver prediction unit 307 first predicts, on the basis of the object information, the position $R(X(T), Y(T))$ of each object at a future time T. As a specific method of prediction, in a case where the current position $Rn0(Xn(0), Yn(0))$ and the current velocity $Vn(Vxn, Vyn)$ of the moving object are set, the three-dimensional object maneuver prediction unit 307 performs a prediction operation on the basis of, for example, the following linear prediction formula [Expression 1].

[Expression 1]

$$Rn(Xn(T), Yn(T)) = Vn(Vxn, Vyn) \times T + Rn0(Xn(0), Yn(0))$$

The computation of Expression 1 is performed assuming a uniform linear motion in which each object moves while maintaining the current speed at a future time. As a result, many objects can be predicted in a short time.

In addition, as another computation method, the position and speed information of another vehicle obtained by sensors or the like and the image information obtained by a camera may be inputted to a learned neural network model to obtain a prediction result for the position and speed information of the other vehicle at a future time. With this computation, it is also possible to calculate the reliability of the prediction result.

The residual risk map arithmetic unit 309 uses an arithmetic operation to generate a residual risk map of surrounding vehicles such as an oncoming vehicle. In a case where there is a scene in which a collision or deadlock occurs unless cooperative maneuver is performed with an object such as a vehicle, a pedestrian, or a bicycle present in the surroundings, the residual risk map arithmetic unit 309 generates a residual risk map by using a predicted trajectory calculated on the basis of a target maneuver for an object which is the subject of a cooperative maneuver, and outputs the generated residual risk map.

[Residual Risk Map Generation Processing]

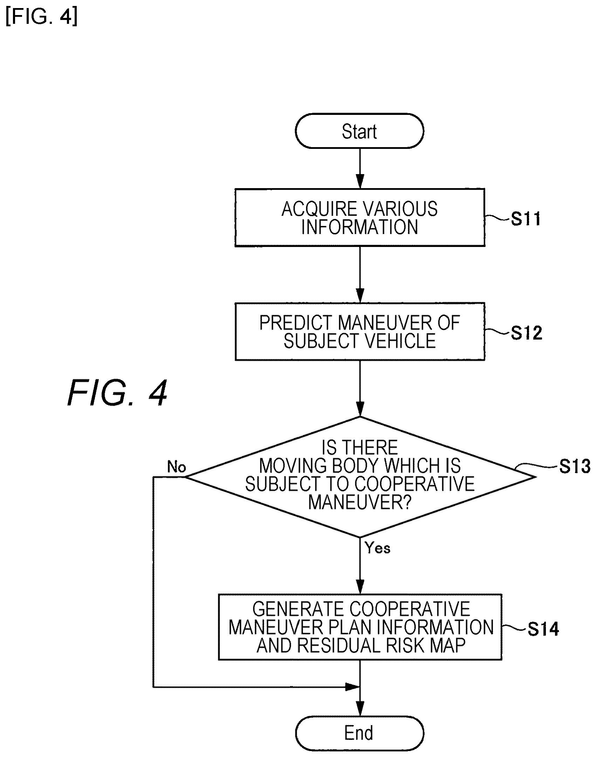

FIG. 4 is a flowchart illustrating an example of processing in which the residual risk map generation unit 205 generates a residual risk map.

First, the residual risk map generation unit 205 acquires various types of information including information on the surrounding area (step S11).

Next, the residual risk map generation unit 205 predicts the target maneuver of the target vehicle on the basis of the acquired information on the surrounding area and on the basis of a current position and speed information of an oncoming vehicle or the like requiring passing travel in cooperation with the host vehicle, and road environment information in which the host vehicle and the target vehicle are traveling (step S12). Note that, as road environment information, the road shape, information on objects present in the surrounding area, map information on the surrounding area, congestion information, and the like can be considered.

The residual risk map generation unit 205 determines whether or not the target vehicle is a moving object that requires cooperative maneuver with the host vehicle (step S13).

In a case where it is determined in step S13 that cooperative maneuver is necessary (Yes in step S13), the residual risk map generation unit 205 generates and outputs a cooperative maneuver plan and a residual risk map on the basis of the target maneuver of the target vehicle requiring the cooperative maneuver (step S14).

In addition, in a case where it is determined in step S13 that cooperative maneuver is unnecessary (No in step S13), the residual risk map generation unit 205 ends the processing without generating a residual risk map.

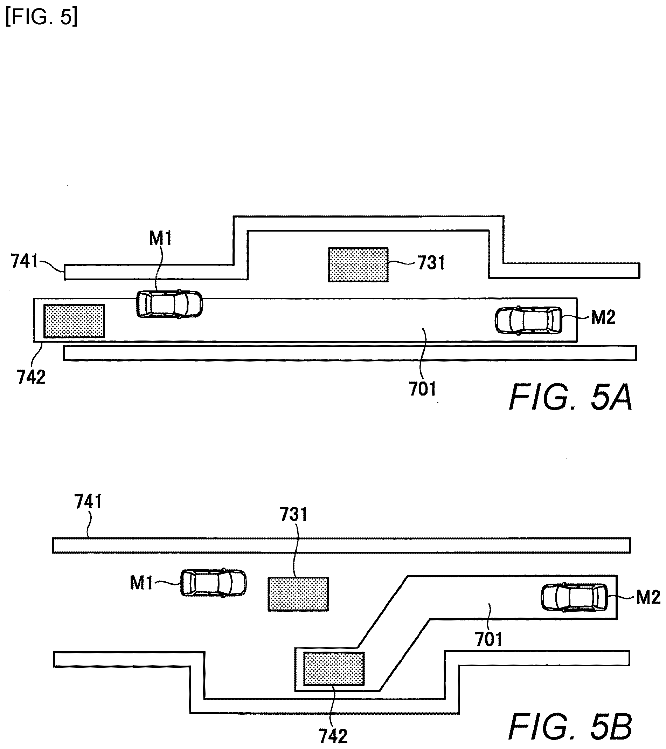

FIGS. 5A and 5B illustrate examples (Example 1 and Example 2) of the results of generating the cooperative maneuver plan and the residual risk map.

Both the example of FIG. 5A (Example 1) and the example of FIG. 5B (Example 1) illustrate a situation where a host vehicle M1 and a target oncoming vehicle M2 needing to perform cooperative maneuver are about to pass each other on a narrow road. The example of FIG. 5A is a case where a road boundary 741 on the left side of the host vehicle M1 is not linear but there is a refuge route, and the example of FIG. 5B is a case where the road boundary 741 on the left side of the host vehicle M1 is linear and the refuge route is on the opposite side (the right side as viewed from the host vehicle M1).

In this manner, in the situation illustrated in FIG. 5A or 5B, the residual risk map generation unit 205 predicts an arrival target point 742 at a future time of the oncoming vehicle M2 (a predetermined time period until the cooperative maneuver is complete) on the basis of various types of information.

The residual risk map generation unit 205 then predicts a route for the oncoming vehicle to reach the prediction point, and calculates an area where the oncoming vehicle passes through the route. The result calculated by the residual risk map generation unit 205 is a residual risk map 701 in both the example of FIG. 5A and the example of FIG. 5B.

In addition, the residual risk map generation unit 205 calculates a host vehicle evasive position 731 for evasion by the host vehicle M1 on the basis of the arrival target point 742 and the residual risk map 701. The residual risk map generation unit 205 then considers a sequence for executing the evasive maneuver in series or in parallel in order to complete the maneuvers of both the host vehicle M1 and the oncoming vehicle M2, and sets a sequence enabling the evasive maneuver to be implemented as a cooperative maneuver plan.

As the cooperative maneuver plan, the residual risk map generation unit 205 first makes a plan in which the host vehicle M1 enters the host vehicle evasive position 731, and then makes a plan in which the oncoming vehicle M2 passes by the host vehicle M1. Finally, the residual risk map generation unit 205 creates a plan for the host vehicle M1 to leave the refuge route.

In a case where a sequence in which such maneuver is complete cannot be found, the arrival target point, the residual risk map, and the host vehicle evasive position are reviewed, and the sequence is searched recursively.

[Configuration of Autonomous Driving Planning Unit]

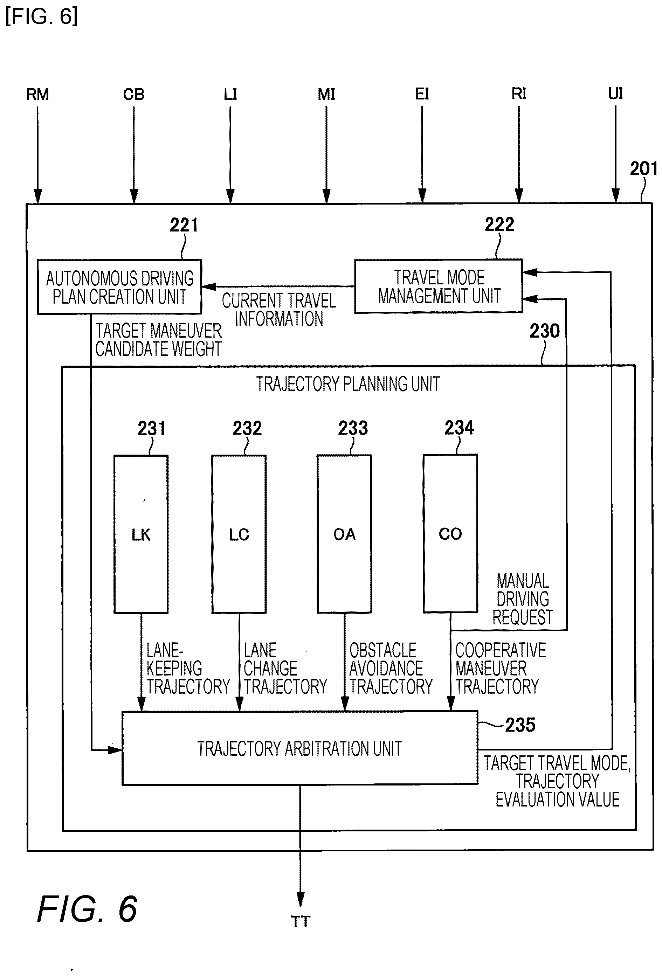

FIG. 6 illustrates a configuration example of the autonomous driving planning unit 201.

The autonomous driving planning unit 201 includes an autonomous driving plan creation unit 221 that calculates a target trajectory, a travel mode management unit 222, and a trajectory planning unit 230.

The residual risk map, the cooperative maneuver plan, the lane information, the map information, the environment information, the route information, the UI information, and the like are supplied to the autonomous driving plan creation unit 221.

The autonomous driving plan creation unit 221 calculates a possible target maneuver candidate weight of the host vehicle on the basis of the route information, the environmental information, and the like. The target maneuver candidate weight is a weight for a maneuver that can be performed by the host vehicle, such as an LK candidate weight for keeping the current lane, an LC candidate weight for changing a lane from the current lane to an adjacent lane, an OA candidate weight for avoiding an obstacle present ahead, and a CO candidate weight for performing cooperative maneuver with another vehicle. For example, in a situation where there is no vehicle or object to be avoided ahead while traveling on a straight road, and it is considered unnecessary, in light of the route information, to change lanes to an adjacent lane, the weight of LK =100, the weight of LC =0, the weight of OA =0, the weight of CO =0, and so forth.

The trajectory planning unit 230 includes a lane-keeping trajectory generation unit (LK) 231, a lane change trajectory generation unit (LC) 232, an obstacle avoidance trajectory generation unit (OA) 233, a cooperative maneuver trajectory generation unit (CO) 234, and a trajectory arbitration unit 235. The trajectory planning unit 230 functions as a travel trajectory generation unit that performs travel trajectory generation processing to generate a travel trajectory from the current position of the vehicle to the target position.

The lane-keeping trajectory generation unit 231 generates a trajectory for maintaining the center of the lane on which the host vehicle is currently traveling.

The lane change trajectory generation unit 232 generates a trajectory for performing a lane change to an adjacent lane of the lane on which the host vehicle is currently traveling.

The obstacle avoidance trajectory generation unit 233 generates a trajectory to avoid objects which are obstacles to travel and which are present in the lane in which the host vehicle is currently traveling.

The cooperative maneuver trajectory generation unit 234 generates a trajectory for performing cooperative maneuver with surrounding objects.

For the lane-keeping trajectory, the lane change trajectory, the obstacle avoidance trajectory, and the cooperative maneuver trajectory, the trajectory arbitration unit 235 evaluates each trajectory on the basis of the degree of safety with the surrounding object and the target maneuver candidate weight, selects the trajectory with the best evaluation, and generates the target trajectory.

The travel mode management unit 222 computes previous selection information for calculating a target maneuver candidate weight at the next sampling time on the basis of the target travel mode selected by the trajectory arbitration unit 235, trajectory evaluation values based on each maneuver candidate, and a manual driving request by the cooperative maneuver trajectory generation unit 234. For example, in a case where LK (maintain current lane: keep lane) is selected according to the evaluation values of LK=60, LC=40, OA=0, and C=0, the current travel information selected at the previous time is generated such that the possibility of LK being selected for the sake of maneuver continuity also becomes high at the next sampling time.

[Configuration of Cooperative Maneuver Trajectory Generation Unit]

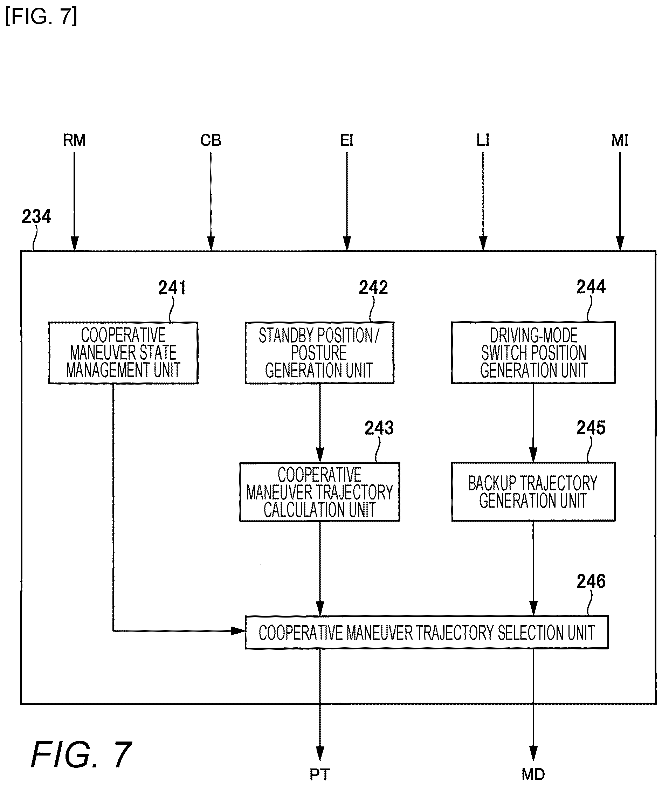

FIG. 7 illustrates a configuration of the cooperative maneuver trajectory generation unit 234.

The cooperative maneuver trajectory generation unit 234 includes a cooperative maneuver state management unit 241, a standby position/posture generation unit 242, a cooperative maneuver trajectory calculation unit 243, a driving-mode switch position generation unit 244 at the time of surrendering control, a backup trajectory generation unit 245, and a cooperative maneuver trajectory selection unit 246. A residual risk map, cooperative maneuver plan information, environment information, lane information, and map information are supplied to the cooperative maneuver trajectory generation unit 234.

The cooperative maneuver state management unit 241 determines whether or not the cooperative maneuver trajectory can be followed, and, in a case where the cooperative maneuver trajectory cannot be followed, determines that it is a deadlock state.

The standby position/posture generation unit 242 generates target standby position/posture candidates in a cooperative maneuver plan.

The cooperative maneuver trajectory calculation unit 243 calculates a travel trajectory (a first travel trajectory) in a cooperative maneuver mode.

The driving-mode switch position generation unit 244 at the time of surrender generates, on the travel trajectory, the driving-mode switch position at the time of surrendering control. The driving-mode switch position is, for example, a position permitting a mode transition for transitioning from the autonomous driving mode to the manual driving mode, and the driving-mode switch position generation unit 244 functions as a transition-permitting position determination unit.

In a case where the vehicle cannot travel on the travel trajectory in the cooperative maneuver mode, the backup trajectory generation unit 245 generates a backup trajectory (a second travel trajectory) to the driving-mode switch position.

The cooperative maneuver trajectory selection unit 246 selects an appropriate trajectory from the cooperative maneuver trajectory calculated by the cooperative maneuver trajectory calculation unit 243 and the backup trajectory generated by the backup trajectory generation unit 245, and controls the travel of the vehicle 100.

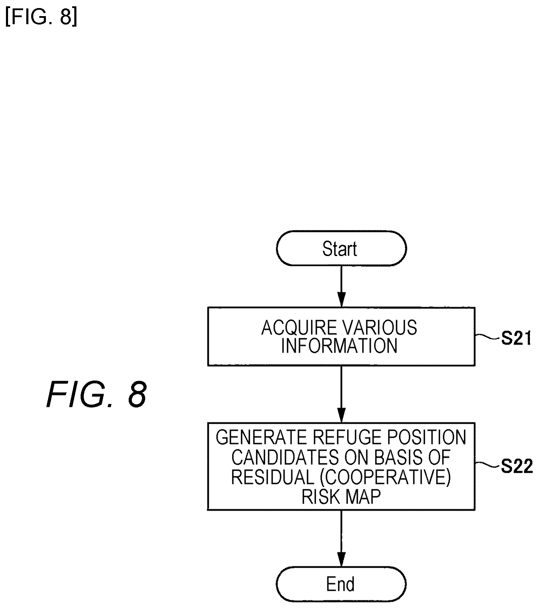

FIG. 8 is a flowchart illustrating an example of standby position/posture generation processing performed by the standby position/posture generation unit 242 in the cooperative maneuver trajectory generation unit 234.

First, the standby position/posture generation unit 242 acquires various types of information such as a residual risk map, cooperative maneuver plan information, environmental information, lane information, and map information (step S21). Next, the standby position/posture generation unit 242 generates target standby position/posture candidates in the current cooperative maneuver step of the cooperative maneuver plan (step S22).

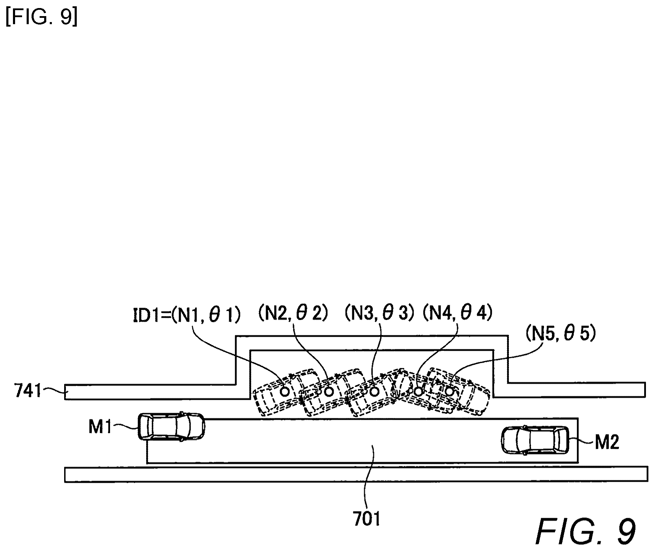

FIG. 9 illustrates an example of processing to generate target standby position/posture candidates in step S22.

In the example of FIG. 9, there is an oncoming vehicle M2 that should perform cooperative maneuver in front of the host vehicle M1. A refuge space is present on the front left side of the host vehicle M1. The road boundary 741 is shown in FIG. 9.

In the example of FIG. 9, the residual risk map 701 generated by the residual risk map generation unit 205 is present in front of the host vehicle M1. For this reason, in order to realize the passing travel which is the cooperative maneuver here, the host vehicle M1 needs to move to a place where the residual risk map 701 does not exist and stand by. Therefore, the residual risk map generation unit 205 generates evasive posture/position candidates $(N1, \theta1)$ to $(N5, \theta5)$ which are surrounding areas enabling travel (inside the road boundary 741) without the residual risk map 701. N represents plane position coordinates, and $\theta$ represents a vehicle head angle of the vehicle. Although the number of evasive posture/position candidates generated at this time is arbitrary, locations close to the residual risk map 701 within a range taking into account the size of the host vehicle M1 are selected as locations to be generated.

[Cooperative Maneuver Trajectory Generation Processing]

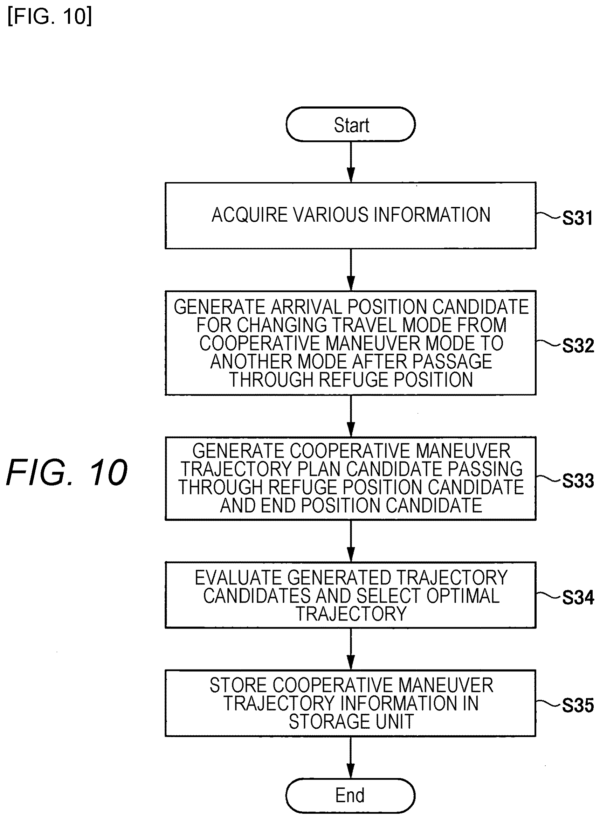

FIG. 10 is a flowchart illustrating processing in which the cooperative maneuver trajectory calculation unit 243 generates a cooperative maneuver trajectory.

First, the cooperative maneuver trajectory calculation unit 243 acquires various types of information such as a residual risk map, cooperative maneuver plan information, environmental information, lane information, and map information (step S31).

The cooperative maneuver trajectory calculation unit 243 then generates end position candidates constituting arrival positions at which, after passage through a refuge position, the travel mode is to be changed from the cooperative maneuver mode to another mode (step S32).

Thereafter, the cooperative maneuver trajectory calculation unit 243 generates a trajectory plan candidate which passes through the refuge position candidate and the end position candidate (step S33).

Further, the cooperative maneuver trajectory calculation unit 243 evaluates the generated trajectory candidates and selects an optimal trajectory (step S34). Finally, the cooperative maneuver trajectory calculation unit 243 stores the cooperative maneuver trajectory information selected in step S34 in the storage unit 308 (step S35).

Here, processing to evaluate the generated trajectory candidate in step S34 and select an optimal trajectory will be described below.

In order to select an optimal trajectory among the generated trajectory candidates, it is conceivable to use, for example, the formula of [Expression 2] as an evaluation computation method for each trajectory candidate. As described above, because a trajectory candidate is generated for each of the posture/position candidates enabling evasion and the end position candidates, it is necessary to select the optimal candidate from among the candidates. Therefore, for each trajectory candidate, the overall evaluation values of the trajectory candidates are set using the following evaluation function.

[Expression 2]

$$\text{Overall evaluation value} = \sum_{i=1}^{5} \left( \text{Weight coefficient (i)} \times \text{individual evaluation value (i)} \right)$$

In Expression 2, a weighting factor of each item is set for the five individual evaluation values, and the sum of the products of the weight coefficient and the individual evaluation values is calculated. The five individual evaluation values were evaluation of safety, evaluation of convenience, evaluation of ride comfort, evaluation of discomfort, and evaluation of feeling of pressure on oncoming vehicles. Regarding the evaluation of safety, it is evaluated whether a sufficient distance is secured to avoid contact with or proximity to objects in the surroundings while traveling on a passing route. For this purpose, the cooperative maneuver trajectory calculation unit 243 calculates a safety evaluation amount by using a distance to an object in the surroundings and an apparent risk value. For example, it is conceivable that the cooperative maneuver trajectory calculation unit 243 uses a reciprocal of the minimum distance between a road and a route candidate or a value of a collision risk map as an evaluation value.

Where the evaluation of convenience is concerned, in a situation where there is an oncoming vehicle, if a cooperative maneuver, a passing operation here, takes time, the oncoming vehicle will wait for a long time, and thus other vehicles and the occupants of the host vehicle will possibly have a sense of distrust. Therefore, in order for the speed of the host vehicle to be constant without depending on the length of the route, the evaluation amount of convenience is calculated using the length of an evacuation route of the host vehicle when evaluating convenience.

For example, a method may be considered in which the cooperative maneuver trajectory calculation unit 243 uses the length of a storage-side route as an evaluation value.

The ride comfort is evaluated based on whether there is an increase in acceleration, jerkiness, and the like generated in the vehicle when the host vehicle follows the evacuation route. For example, a route on which the magnitude of the lateral acceleration and the time in which the lateral acceleration occurs are long is considered to provide poor ride comfort. In addition, in a state where the turning radius of the route is small, a route for which the evaluation value pertaining to travel ride comfort increases as the long turning angle increases is a route for which the ride comfort is unfavorable. As a result, it is conceivable that the cooperative maneuver trajectory calculation unit 243 uses the value of (reciprocal of turning radius) × (total turning angle) as an evaluation index.

Regarding the evaluation of discomfort, it is considered that the occupant of the host vehicle will feel uncomfortable when passing travel requiring the steering wheel to be turned is performed, and the evaluation value is calculated using the number of times the steering wheel is turned.

With regard to the evaluation of the feeling of pressure on an oncoming vehicle, there is a possibility that a route which is too close to the oncoming vehicle will cause the occupants of the host vehicle and the other vehicle to have a sense of distrust and a sense of fear. Therefore, the cooperative maneuver trajectory calculation unit 243 calculates the evaluation value on the basis of the distance from the oncoming vehicle to the candidate route. For example, a method may be considered in which the cooperative maneuver trajectory calculation unit 243 uses the reciprocal of the minimum distance between a center position coordinate of another vehicle and a route candidate as an evaluation index.

[Processing to Generate End Position Candidates]

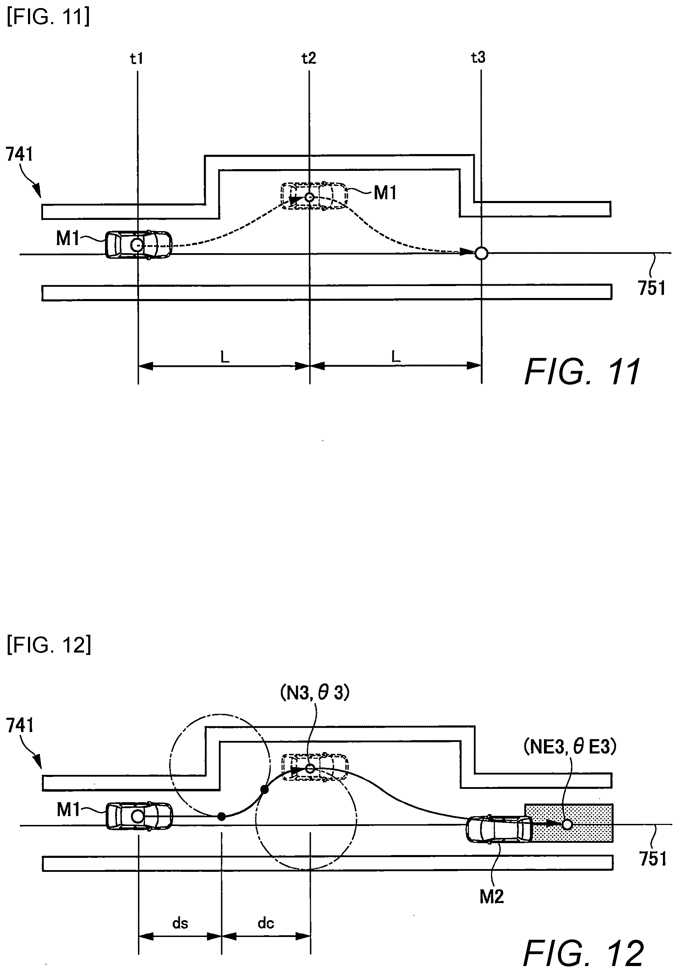

FIG. 11 is a diagram explaining an example of the processing to generate end position candidates in step S32.

As the end position candidate here, a point where a transition is expected from a cooperative maneuver mode to another mode (for example, a lane keep mode) is selected. In the example of FIG. 11, in a situation where a place where the vehicles can pass each other is set by the road boundary 741, a position on the center line 751 of the travel lane of the host vehicle M1 is set as an end position candidate, the position being stored in the map information and having line symmetry (a position where the lengths of L are equal in FIG. 11) between the passing mode starting point and each of the evacuation posture/position candidates.

[Processing to Generate Cooperative Maneuver Trajectory Candidates]

FIG. 12 is a diagram explaining an example of the processing to generate a cooperative maneuver trajectory candidate in step S33.

In order to generate the cooperative maneuver trajectory, a cooperative maneuver target route is generated, and then a cooperative maneuver target speed for traveling on the generated route is generated. As the processing to generate the cooperative maneuver target route, for example, an arc, a straight line, and a clothoid curve are generated for the target evasive position and end position candidates by using the residual risk map and the posture/position candidates enabling evasion. In FIG. 12, the route along which the host vehicle M1 travels from the current position to the refuge position is a straight line substantially parallel to the center line 751 until the road boundary 741 is straight and the refuge position starts (section ds). Further, in a place (section dc) where the road boundary 741 is deformed, a route toward the refuge position (N3, θ3) is set as a curved route using two arc curves as illustrated in FIG. 12. After the oncoming vehicle M2 has been passed, the cooperative maneuver trajectory calculation unit 243 sets a route for the return to the center line 751.

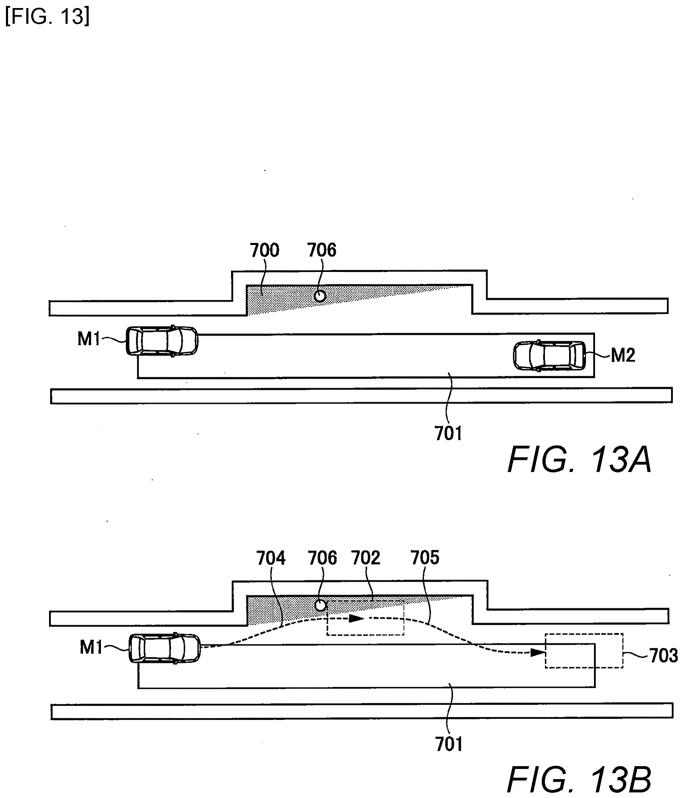

FIGS. 13A and 13B illustrate examples (FIG. 13A: before entering the passing trajectory, FIG. 13B: Example of the passing trajectory) of representative scenes of cooperative maneuver travel and a cooperative maneuver trajectory when oncoming vehicle M2 is present in front of the host vehicle M1.

Here, as illustrated in FIG. 13A, the host vehicle M1 and the oncoming vehicle M2 which is the subject of a cooperative maneuver are traveling on either side of a passing point. There is a refuge region on the left side of the host vehicle M1, and there is an obstacle 706 in a blind spot region 700 of the sensor of the host vehicle M1. Furthermore, the residual risk map 701, which is calculated based on the surrounding environment and the position of the oncoming vehicle M2, is acquired.

In such a situation, as illustrated in FIG. 13B, the cooperative maneuver trajectory calculation unit 243 computes, on the basis of the residual risk map 701, an evasive position 702 of the host vehicle M1, a trajectory 704 leading from the current position to the evasive position 702, and a trajectory 705 leading from the evasive position 702 to the end position 703.

[Case where Cooperative Maneuver Trajectory Cannot Be Followed]

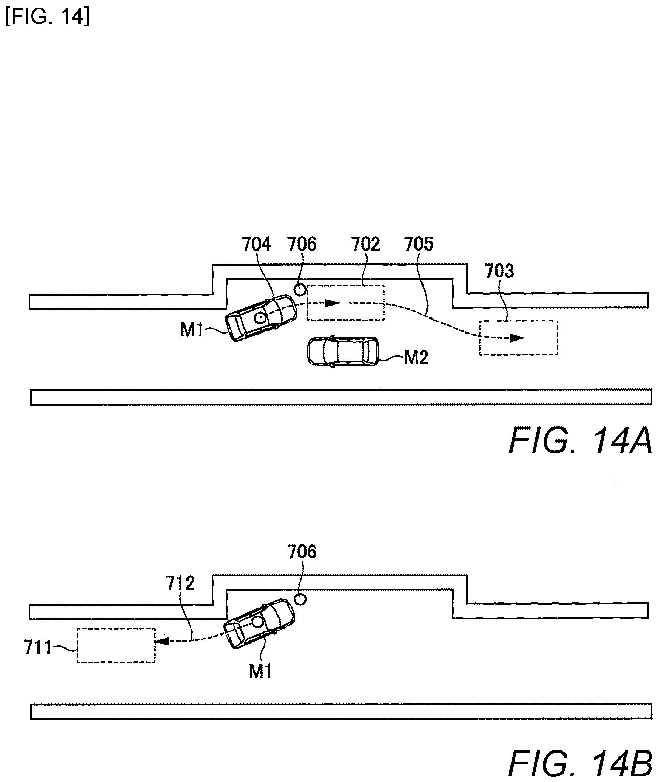

FIGS. 14A and 14B illustrate an example of a case where, when the vehicle travels along the cooperative maneuver trajectory, the vehicle cannot follow the cooperative maneuver trajectory planned by the oncoming vehicle or the surrounding environment.

Here, as illustrated in FIG. 14A, the host vehicle M1 attempts to implement the cooperative maneuver by following the cooperative maneuver trajectories 704 and 705. This is a state in which the obstacle 706, which is present in the blind spot region 700 when the cooperative maneuver trajectory is planned, is detected in the middle of the maneuver process. In the course of the maneuver, the oncoming vehicle M2, which is the subject of a cooperative maneuver, is approaching the host vehicle M1. Therefore, the host vehicle M1 cannot generate a route for avoiding the obstacle 706, and it is difficult for the other vehicle M2 to move backward because the road is narrow. For this reason, it is difficult for both vehicles to continue the cooperative maneuver.

In the situation as illustrated in FIG. 14A, the vehicle control device 1 of the host vehicle M1 according to the present embodiment determines that the cooperative maneuver with the oncoming vehicle M2 which is subject to the cooperative maneuver can no longer be executed, and after canceling the cooperative maneuver travel mode and entering a safe vehicle state, notifies the occupant or the remote operator that the cooperative maneuver travel mode cannot be continued. The notification may be issued at the moment when the cooperative maneuver travel mode is canceled.

Note that the vehicle control device 1 of the host vehicle M1 is in a deadlock state in which the host vehicle M1 cannot move forward or backward in a case where, while the vehicle control device 1 is generating a cooperative maneuver trajectory and is about to retreat to an evasive position, a following vehicle (not illustrated in FIGS. 14A or 14B) is approaching the rear of the host vehicle M1 in a situation where the oncoming vehicle M2, which is the subject of the cooperative maneuver, is approaching and the speed reaches 0 in consideration of the risk of collision. For example, as illustrated in FIG. 14B, the host vehicle M1 can sometimes move backward to a backward movement position 711. However, in a case where a following vehicle (not illustrated) is approaching, such backward movement cannot be performed.

In a case where this deadlock state continues for a certain period of time, it is determined that it is difficult for the host vehicle M1 alone to overcome this state. Therefore, the vehicle control device 1 notifies the occupant or the remote operator at a remote point that the vehicle M1 is in the deadlock state via a vehicle-mounted display device or the like, and urges the occupant or the remote operator to drive. However, in a case where the deadlock state has been reported and a manual driving request has been issued, a state is assumed where the vehicle is approaching a vehicle which is the subject of a cooperative maneuver or an object in the surroundings, or the like. After such a state, execution of manual driving is expected to require driving to eliminate the deadlock state while avoiding collision with the object in the surroundings, and the occupant or the circular operator is expected to feel a burden. Therefore, after moving to a place where the deadlock state can be resolved more safely and in a safer state, it is desirable to switch the manual driving operation to the occupant or the remote operator.

In the vehicle control device 1 according to the present embodiment, the driving-mode switch position generation unit 244 and the backup trajectory generation unit 245 illustrated in FIG. 7 generate an appropriate backup trajectory up to the position where the driving-mode switch is performed by the occupant at the time of the deadlock.

[Processing to Generate Driving-Mode Switch Position at the Time of Surrendering Control]

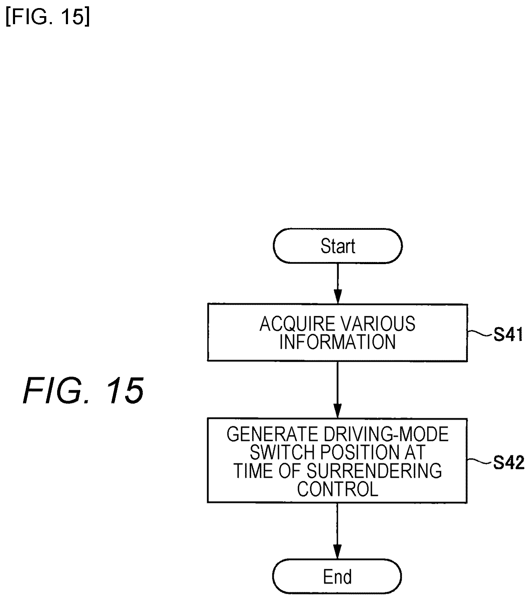

FIG. 15 is a flowchart illustrating processing in which the driving-mode switch position generation unit 244 generates the driving-mode switch position at the time of surrendering control.

First, the driving-mode switch position generation unit 244 acquires various types of information such as a residual risk map, cooperative maneuver plan information, environmental information, lane information, and map information (step S41). The driving-mode switch position generation unit 244 then generates a driving-mode switch position at the time of surrendering control (step S42). In the present embodiment, the driving-mode switch position at the time of surrendering control is a point where the cooperative maneuver mode is started from the lane keeping mode or the like, or when the cooperative maneuver mode is started by the occupant, or the like.

In this way, if the host vehicle can be automatically made to travel to the point where the cooperative maneuver mode is started to urge the occupant or the remote operator at the remote point to switch the driving, it is considered possible to reduce the driving burden on the driving-mode switch driver. In addition, in a case where the occupant or the like has manually driven to the point where the cooperative maneuver was started, the initial state of the passing driving support is restored, and it is thus possible to reduce the burden on the driver.

[Backup Trajectory Generation Processing]

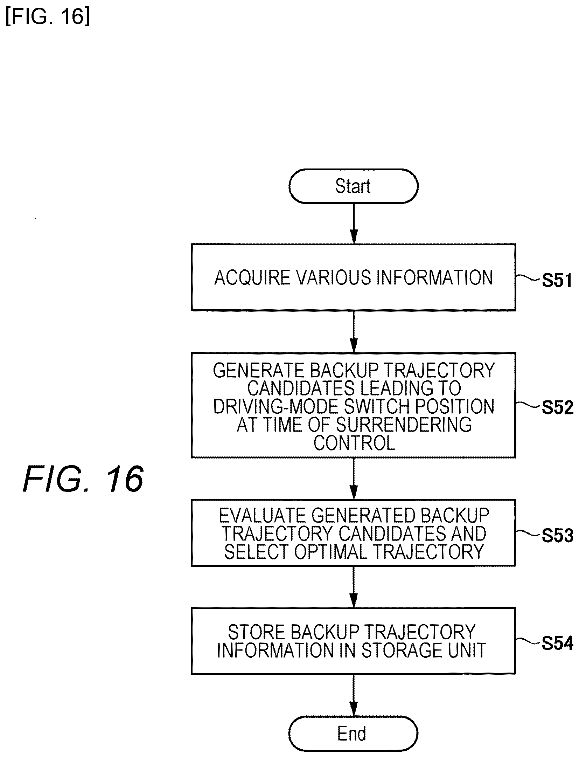

FIG. 16 is a flowchart illustrating processing in which the backup trajectory generation unit 245 generates the backup trajectory.

First, the backup trajectory generation unit 245 acquires various types of information such as a residual risk map, cooperative maneuver plan information, environment information, lane information, and map information (step S51). The backup trajectory generation unit 245 then generates a backup trajectory candidate leading to the driving-mode switch position at the time of surrendering control (step S52). The driving-mode switch position here is a position generated by the driving-mode switch position generation unit 244. It is conceivable that the route to the driving-mode switch position is created using a straight line, an arc curve, or the like, as described with reference to FIG. 12. In addition, it is preferable to generate a plurality of the backup trajectory candidate generated in step S52 by combining forward movement, backward movement, and the like.

Next, in a case where the number of candidates generated in step S52 is plural, the backup trajectory generation unit 245 evaluates the plurality of trajectory candidates and selects an optimal trajectory from the results (step S53). As processing to evaluate a plurality of trajectory candidates, for example, the method described in step S34 of the flowchart of FIG. 10 can be applied.

Thereafter, the backup trajectory generation unit 245 stores the selected backup trajectory in the storage unit 308 (step S54).

[Configuration of Travel Mode Management Unit]

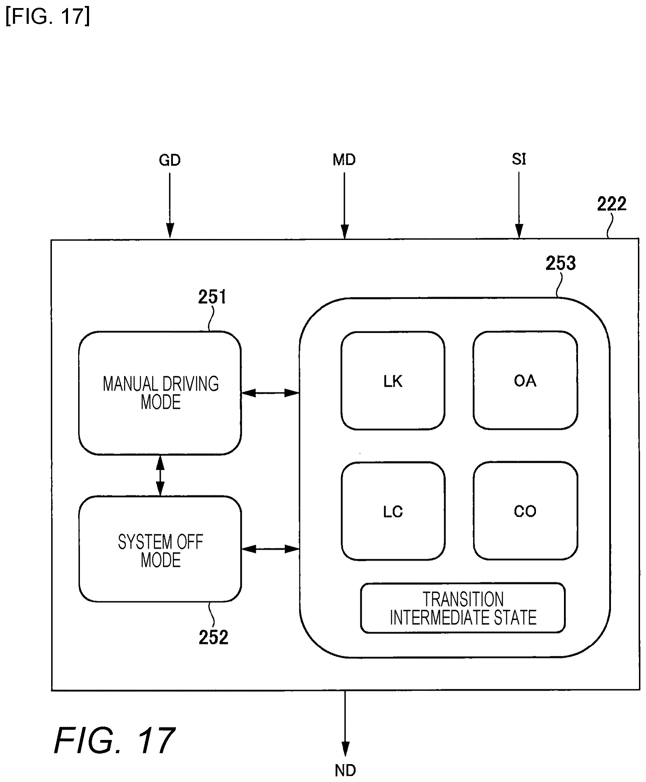

FIG. 17 illustrates a configuration example of the travel mode management unit 222 (FIG. 6).

As illustrated in FIG. 17, the travel mode management unit 222 manages three states, namely, a manual driving mode 251, a system off mode 252 of the autonomous driving system, and an autonomous driving mode 253.

When a power switch or the like of the vehicle 100 is turned on, the travel mode management unit 222 transitions from the system off mode 252 to the manual driving mode 251 or the like. Furthermore, the travel mode management unit 222 transitions from the manual driving mode 251 or the like to the autonomous driving mode 253 by turning on an autonomous driving switch of the driver or the like.

As described above, the autonomous driving mode 253 includes lane keep (LK), lane change (LC), and the like.

In addition, a transition intermediate state exists as a state between the aforementioned modes. In a case where a deadlock occurs in the state of the cooperative maneuver mode (CO) and it is determined that the autonomous driving system needs to surrender control, a backup trajectory is generated. Further, after automatically traveling to the driving-mode switch position, the travel mode management unit 222 issues a manual driving request by means of the cooperative maneuver trajectory selection unit 246 (FIG. 7) and transitions to the manual driving mode 251.

[Effects of First Embodiment]

As described above, according to the vehicle control device 1 of the present embodiment, when it is necessary to pass an oncoming vehicle during autonomous driving, processing is performed to generate a cooperative maneuver trajectory on the basis of the oncoming vehicle and the surrounding situation and to simultaneously generate a backup trajectory. As a result, the host vehicle is able to pass the oncoming vehicle appropriately without colliding with the oncoming vehicle. In addition, when the backup trajectory is to be generated, after producing a plurality of candidates, an appropriate value is selected from among the overall evaluation values of the respective trajectory candidates. It is thus possible to execute a cooperative maneuver without providing ride comfort or making the occupant feel uneasy.

Here, in the case of the present embodiment, because the start position of the autonomous driving mode by the cooperative maneuver is set to the driving-mode switch position which is the mode transition-permitting position, it is possible to easily and appropriately return to the driving-mode switch position.

<Second Embodiment>

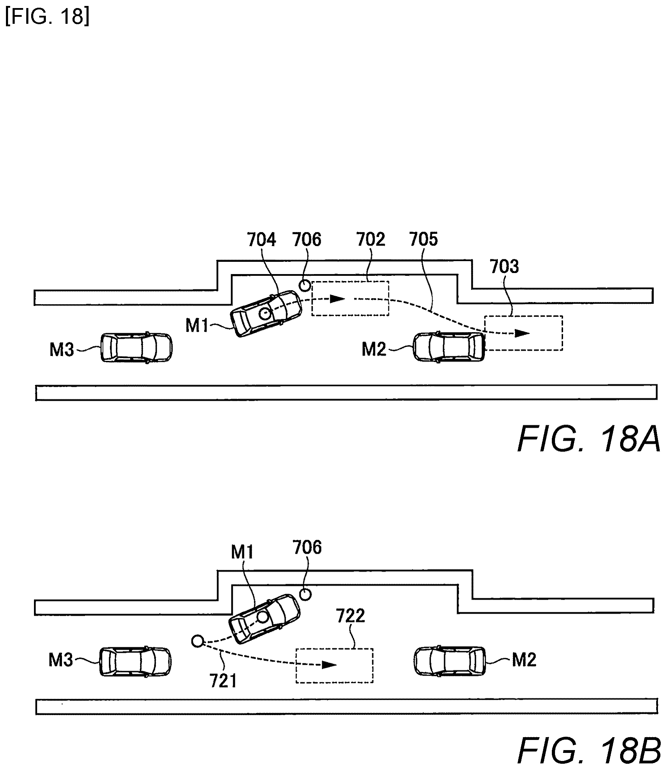

Hereinafter, a vehicle control device and a vehicle control method according to a second embodiment of the present invention will be described with reference to FIGS. 18 to 19. In the second embodiment, the configuration of the vehicle control device 1 and the like included in the vehicle 100 is the same as the configuration described in the first embodiment, and is different from the first embodiment in that the backup trajectory generation unit 245 generates a trajectory with the driving-mode switch position at the time the vehicle control device surrenders control serving as a point other than the passing start position.

[Example in which Positions Other Than the Passing Start Position Are Used as Driving-Mode Switch Positions]

In the examples of FIGS. 18A and 18B, a passing maneuver cannot be continued in the course of executing the passing maneuver. That is, the example of FIG. 18A represents a state in which the obstacle 706 is found while the host vehicle M1 is moving while calculating the trajectory 704 leading from the current position to the evasive position 702 and the trajectory 705 leading from the evasive position 702 to the end position 703. Here, the following vehicle M3 is approaching behind the host vehicle M1 and cannot return to the passing start position.

In this case, as illustrated in FIG. 18B, the backup trajectory generation unit 245 searches for a position 722 where the driving-mode switch can be safely performed at a place other than the passing start position, and performs processing to generate a backup trajectory 721 leading to the place.

[Specific Calculation Example of Driving-Mode Switch Position]

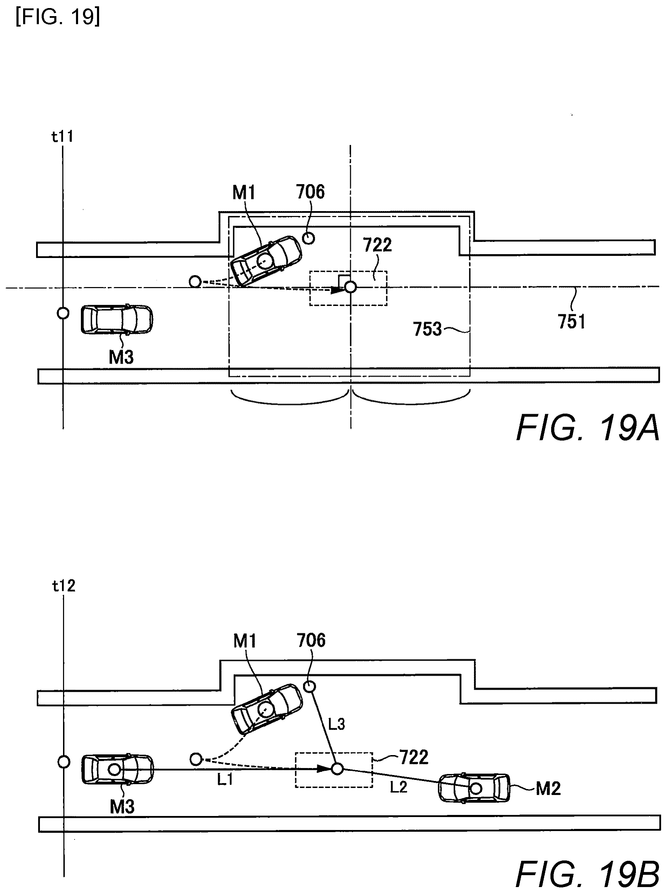

FIGS. 19A and 19B illustrate an example of processing in which the backup trajectory generation unit 245 searches for and sets the driving-mode switch position 722.

First, as illustrated in FIG. 19A, the host vehicle M1 is in a state in which the obstacle 706 is found while following the cooperative maneuver trajectory, and the backup trajectory is generated from the current position of the host vehicle M1. Alternatively, the example represents a state in which the backup trajectory is generated before the obstacle 706 is found.

In this state, the following vehicle M3 is approaching from behind the host vehicle M1, and cannot return to the cooperative maneuver mode start point. Therefore, in the present embodiment, on the narrow road along which the host vehicle M1 is passing, the backup trajectory generation unit 245 searches for a driving-mode switch position on the basis of a lane center line 751 and the blind spot information of the vehicle sensor set in the map information mounted on the host vehicle M1.

For example, the backup trajectory generation unit 245 sets the driving-mode switch position 722 on the lane center line 751 and at a center position 751 in the length direction inside a turnout 753.

In addition, it is conceivable to determine, as the driving-mode switch position 722 (the mode transition-permitting position), a position where the degree of travel risk of the vehicle M1 determined at least from the presence or absence of a blind spot region of an external sensor of the host vehicle M1 or an obstacle is equal to or less than a threshold value. As a method for calculating the travel risk level, for example, as illustrated in FIG. 19B, the degree of travel risk is calculated from a distance L1 from the following vehicle M3, a distance L2 from the oncoming vehicle M2, a distance L3 from an obstacle, which are distances from objects in the surroundings, and the small size of areas that cannot be detected by the sensors of the host vehicle M1.

[Effects of Second Embodiment]

According to the vehicle control device 1 of the present embodiment, even in a case where the driving-mode switch is performed, the distance to the surrounding objects and the safety can be secured to a certain extent, thereby diminishing the likelihood of causing the driving-mode switch driver anxiety.

In particular, in the present embodiment, in a case where there is a blind spot region of the external sensor, the driving-mode switch position constituting the mode transition-permitting position is set, thus enabling an appropriate driving-mode switch position to be set in consideration of the blind spot region of the external sensor.

Further, in the present embodiment, an appropriate driving-mode switch position can also be set by using, as the driving-mode switch position, a position where the degree of travel risk of the vehicle M1 determined from the presence or absence of a blind spot region of the external sensor or of an obstacle is equal to or less than the threshold value.

<Third Embodiment>

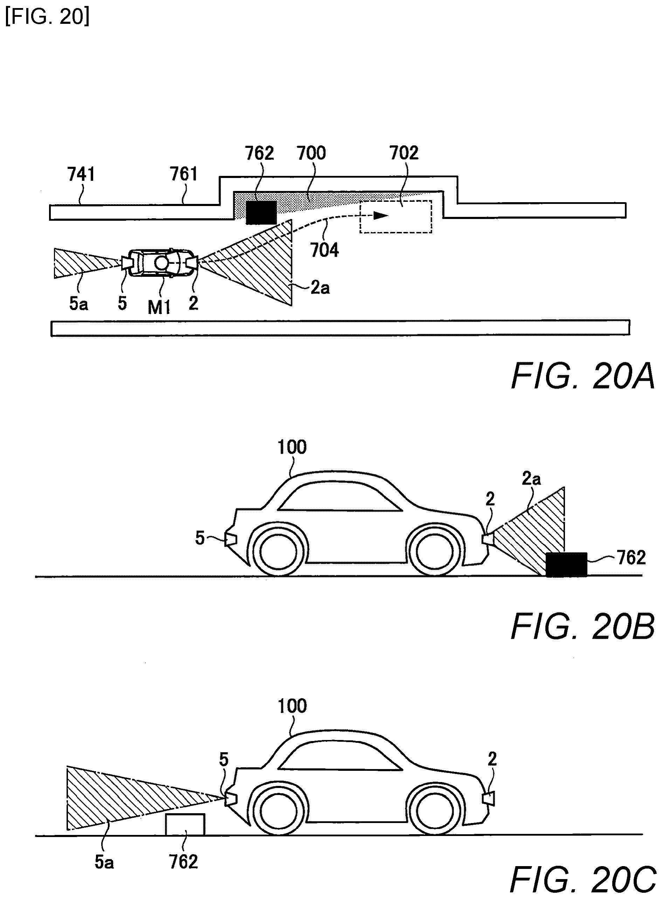

Next, a vehicle control device and a vehicle control method according to a third embodiment of the present invention will be described with reference to FIGS. 20 to 22. In the third embodiment, the configuration of the vehicle control device 1 and the like included in the vehicle 100 is the same as the configuration described in the first embodiment. Further, in the third embodiment, processing to generate a backup trajectory is different from that of the first embodiment.

[Blind Spot of Host Vehicle and Example of Backup Trajectory in Consideration of Blind Spot]

The vehicle control device 1 according to the present embodiment predicts a state in which a surrounding blind spot is present at a future position during execution of a cooperative maneuver and a maneuver of another vehicle, and generates a backup trajectory in which a detection range of a sensor for detecting surrounding objects of the host vehicle is estimated.

FIGS. 20A, 20B, and 20C illustrate examples of blind spots of the host vehicle.

In the example illustrated in FIG. 20A, a blind spot occurrence factor object 761 is present near the road boundary 741. This is assumed to be a high wall, a utility pole, or the like. The blind spot occurrence factor object 761 produces a blind spot region 700 of the sensor 2 near the refuge space.

In the example of FIG. 20A, the evasive position 702 can be generated, but an obstacle 762 enters the blind spot region 700 in the vicinity of the evasive position 702, and there is a possibility of hindering passage of the vehicle M1.

In this case, as illustrated in FIG. 20B, it is possible to detect an object (the obstacle 762) that has entered a front detection range 2a of the sensor 2 for detecting the front of the host vehicle M1.

Meanwhile, in a case where, by using the backup trajectory, the vehicle moves backward to the driving-mode switch position at the time of surrendering control, the sensor 5 for detecting the rear of the host vehicle M1 is capable of detecting an object that has entered a rear detection range 5a. However, the detectable range varies depending on the type of sensor mounted on the vehicle M1. In addition, in a case where an optical camera or the like is used as a recognition sensor, there is a possibility that there is a difference in detection capability between the front side of the vehicle and the rear side of the vehicle due to the surrounding illumination environment such as a street lamp, the impact of the head lamps of a vehicle present in the surroundings, or the like.

For this reason, for example, it is conceivable that, for obstacle 762, which could have been detected in the case of moving forward toward the passing position, cannot be detected in the case of moving backward to the driving-mode switch position at the time of surrendering control, or that the detection is insufficient.

Specifically, as illustrated in FIG. 20C, it is assumed that the obstacle 762 cannot be detected in the rear detection range 5a of the sensor 5 for detecting the rear of the host vehicle M1.

In consideration of such a case, the backup trajectory generation unit 245 of the vehicle control device 1 according to the present embodiment generates the backup trajectory from each point on the passing trajectory at which the future detection state of the host vehicle sensor is predicted.

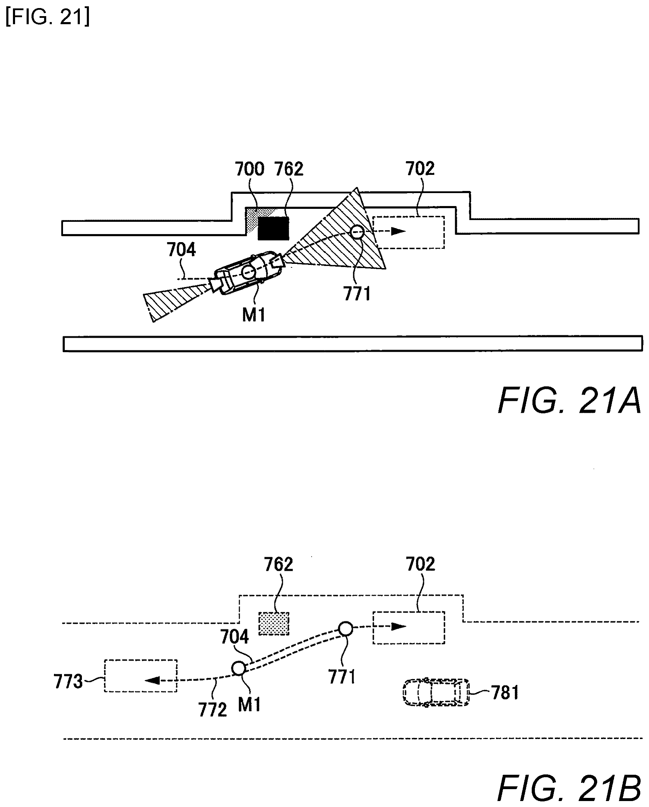

The example of FIG. 21A illustrates a case where, when the host vehicle M1 is traveling on the cooperative maneuver trajectory 704 toward the evasive position 702, the front recognition sensor detects the obstacle 762 in the blind spot region 700 en route. Here, the vehicle control device 1 checks, with regard to the obstacle 762 detected by the front recognition sensor, whether or not the obstacle 762 can be detected from a future position 771 by using the rear recognition sensor. As a method therefor, the surrounding environment such as a wall around the host vehicle, or another vehicle or a host vehicle sensor, and the like are numerically modeled. The backup trajectory generation unit 245 then calculates whether or not a backup trajectory can be generated from the future position 771 by means of computation using a numerical model.

FIG. 21B illustrates an example in which a backup trajectory 772 to a driver driving-mode switch position 773 is calculated from the future position 771. Here, the backup trajectory 772 needs to be a trajectory that avoids the obstacle 762 detected by the front recognition sensor.

[Back-Up Trajectory Generation Processing Considering Vehicle Dead Angle]

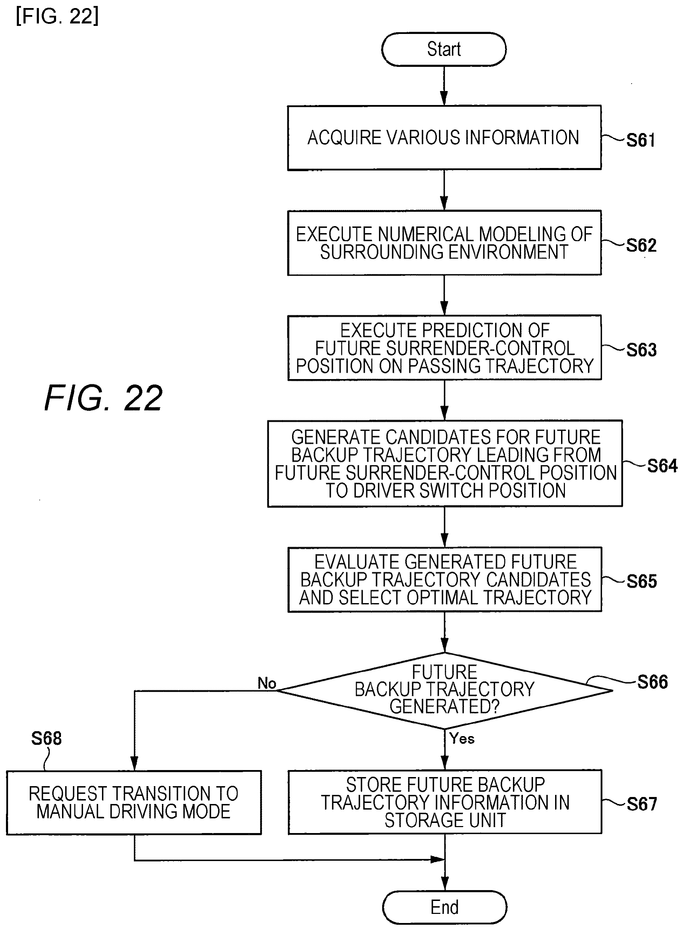

FIG. 22 is a flowchart illustrating processing in which the backup trajectory generation unit 245 generates a backup trajectory, according to the present embodiment.

First, the backup trajectory generation unit 245 acquires various types of information (step S61).

Next, the backup trajectory generation unit 245 executes numerical modeling on the host vehicle, mounted sensors, objects in the surroundings such as falling objects, walls, and traffic participants, oncoming vehicles which are the subjects of cooperative maneuver, and the like (step S62). In a case where vehicles are to be numerically modeled, the backup trajectory generation unit 245 models the behavior of vehicles using a two-wheeled vehicle model, a four-wheeled vehicle model, or the like. In addition, the shapes of the vehicles are modeled on the basis of the shape and color information of the vehicles detected by cameras or the like and the size information of the vehicles based on the point cloud information such as the LiDAR.

Next, the driving-mode switch position generation unit 244 predicts a future surrender-control position of the cooperative maneuver trajectory which is a passing trajectory (step S63). The backup trajectory generation unit 245 then generates candidates for a future backup trajectory from the future position (surrender-control position) of the cooperative maneuver trajectory predicted by the driving-mode switch position generation unit 244 to the driver switch position (step S64). As a result, the backup trajectory 772 is updated due to the generation of the future backup trajectory candidates. As the driver switch position, the cooperative maneuver start position or the search result described in the second embodiment, or the like, is used. Note that, although the backup trajectory 772 is updated here, the trajectory 704 (first travel trajectory) leading from the current position to the evasive position 702 may be updated.

Thereafter, the cooperative maneuver trajectory selection unit 246 evaluates the generated future backup trajectory candidates and selects an optimal trajectory (step S65). The cooperative maneuver trajectory selection unit 246 then confirms whether or not it has been possible to generate a future backup trajectory (step S66).

At the time of confirmation here, as illustrated in FIG. 21B, in a case where the vehicle M1 travels on the trajectory 704 (first travel trajectory) leading from the current position to the evasive position 702, the difference between the detection result of an external sensor (the front recognition sensor 2 illustrated in FIG. 20) and the detection result of an external sensor (the rear recognition sensor 5 illustrated in FIG. 20) in a case where the vehicle is to travel on the backup trajectory 772 (second travel trajectory) is acquired or estimated, and then it is determined whether the appropriate backup trajectory 772 has been obtained.

That is, in a case where there is a difference in the detection range or the detection performance among the plurality of external sensors, the cooperative maneuver trajectory selection unit 246 determines whether or not an appropriate future backup trajectory has been generated in consideration of the difference from the detection result. Specifically, as illustrated in FIG. 20C, even in a case where, when the obstacle 762 has been detected by the front recognition sensor, the obstacle 762 cannot be detected by the rear recognition sensor at the time of backward movement, as illustrated in FIG. 20C, the recognition result that the obstacle 762 is present is corrected in light of the result detected by the front recognition sensor, thereby yielding the backup trajectory 772 with which the obstacle 762 is avoided.

In step S66, in a case where an appropriate future backup trajectory has been generated after the acquisition or estimation of the difference between the detection results of both sensors 2 and 5 (Yes in step S66), the cooperative maneuver trajectory selection unit 246 stores the future backup trajectory information selected in step S65 in the storage unit 308 and ends the processing (step S67). Note that the determination of Yes in step S66 includes a case where the trajectory 704 leading from the current position to the evasive position 702 is updated in addition to a case where the backup trajectory can be generated in the future.

If an appropriate future backup trajectory has not been generated after acquisition or estimation of the difference between the detection results of both the sensors 2 and 5 in step S66 (No in step S66), the cooperative maneuver trajectory selection unit 246 makes a request for a transition to the manual driving mode (step S68).

That is, if the cooperative maneuver is continued as is in a situation where the future backup trajectory has not been generated, it may not be possible to generate the backup trajectory when a deadlock occurs at a future position, and control may be surrendered at a dead-locked place or the like. Therefore, the request for manual driving mode is executed before the deadlock occurs. Alternatively, instead of making a request for the manual driving mode, the vehicle may be moved to the driving-mode switch position by using the backup trajectory that can be generated at the present time.

[Effects of Third Embodiment]

As described above, according to the present embodiment, in passing travel in a state where a blind spot region is present, the target evasive position/posture and the target trajectory are not changed during the passing travel by generating the trajectory by taking into account the backup trajectory from a future position. In addition, even in a case where it is necessary to surrender control, the ride comfort and the uneasiness of the occupant are no longer imparted.
Furthermore, even in a case where there is a difference in performance (detection range, detection performance, or the like) of a plurality of external sensors mounted on the vehicle, it is possible to generate an appropriate backup trajectory which takes into account the performance difference of the external sensors by recognizing an obstacle or the like from the difference in the detection results of the respective sensors, correcting the recognition result, and generating an appropriate backup trajectory.

<Modifications of Embodiments>

Note that the above-described embodiments have been described in detail to facilitate understanding of the present invention, and are not necessarily limited to those having all the described configurations. Furthermore, the configuration and processing described in the above-described embodiment can be variously modified and changed. For example, the passing operation described with reference to FIG. 5 and the like is an example in which, in an area where the host vehicle is traveling along the left side of the road, the host vehicle is moved to the left of the road to perform passing, and in an area where the host vehicle is traveling along the right side of the road, the left and right directions at the time of passing each other are reversed.
In addition, in each of the above-described embodiments, travel trajectories (the first travel trajectory and second travel trajectory) are generated (calculated), and travel along the travel trajectories is performed by autonomous driving. In general, travel trajectories are described as having road coordinate positions as well as information on the times when passage through the coordinate positions takes place, and so too in the case of the present invention, travel is controlled using coordinate positions and time information.
In contrast, a travel trajectory may also involve information on a so-called travel route which only has information on road coordinate positions, without having information on the times when the vehicle passes through each coordinate position. In passing travel, it is preferable to determine to which position the host vehicle moves at each time while predicting the position of the oncoming vehicle at each time. However, in a situation where the oncoming vehicle has stopped, or similar, a travel route having only coordinate position information may be generated instead of a travel trajectory.
Because the travel route is generated in this manner, it is not necessary to handle time information, and the travel trajectory (travel route) can be generated more easily.
In addition, in the configuration illustrated in FIG. 2, the vehicle control device 1 configured by a computer is configured as a device that performs the processing of each of the above-described embodiments, but a program implemented in an existing vehicle control device 1 may be modified to perform similar processing.
The program in this case may be prepared in the memory in the computer illustrated in FIG. 2 or may be transferred on a recording medium such as an external memory, an IC card, an SD card, or an optical disk.
Further, all or part of the vehicle control device 1 may be realized by dedicated hardware such as a field programmable gate array (FPGA) or an application specific integrated circuit (ASIC).
In the configuration diagrams illustrated in FIGS. 2, 3, 6, 7, and 17, only control lines and information lines considered to be necessary for the description are illustrated, and not all the control lines and information lines on the product are necessarily illustrated. In practice, almost all the configurations may be considered to be connected to each other. In addition, in the flowcharts illustrated in FIGS. 4, 8, 10, 15, 16, and 22, the processing order may be changed or a plurality of processes may be simultaneously executed as long as the processing results are the same.

Reference Signs List

| | |
|---|---|
| 1 | vehicle control device |
| 2 | forward recognition sensor |
| 3 | left-side recognition sensor |
| 4 | right-side recognition sensor |
| 5 | rear recognition sensor |
| 6 | steering wheel |
| 7 | steering torque detection device |

| | |
|---|---|
| 8 | steering control device |
| 9 | master cylinder |
| 10 | steering control mechanism |
| 11FL | wheel speed sensor |
| 12 | brake pedal |
| 13 | brake control mechanism |
| 14 | combination sensor |
| 15 | braking control device |
| 16FL, 16FR, 16RL, 16RR | wheel cylinder |
| 17 | accelerator pedal |
| 18 | stroke sensor |
| 19 | acceleration control device |
| 20 | throttle control mechanism |
| 21 | steering-wheel angle detection device |
| 23 | communication device |
| 24 | display device |
| 100 | vehicle |
| 101FL | front left wheel |
| 101FR | front right wheel |
| 101RL | rear left wheel |
| 101RR | rear right wheel |
| 201 | autonomous driving planning unit |
| 202 | automatic parking planning unit |
| 203 | vehicle motion control unit |
| 204 | actuator control unit |
| 205 | residual risk map generation unit |
| 206 | vehicle network |
| 211 | CPU |
| 212 | memory |
| 213 | input/output unit |
| 214 | interface |
| 221 | autonomous driving plan creation unit |
| 222 | travel mode management unit |
| 230 | trajectory planning unit |
| 231 | lane-keeping trajectory generation unit |
| 232 | lane change trajectory generation unit |
| 233 | obstacle avoidance trajectory generation unit |
| 234 | cooperative maneuver trajectory generation unit |
| 235 | trajectory arbitration unit |
| 241 | cooperative maneuver state management unit |
| 242 | standby position/posture generation unit |
| 243 | cooperative maneuver trajectory calculation unit |
| 244 | driving-mode switch position generation unit |
| 245 | backup trajectory generation unit |
| 246 | cooperative maneuver trajectory selection unit |
| 251 | manual driving mode |
| 252 | system-off mode |
| 253 | autonomous driving mode |
| 301 | radar |
| 302 | stereo camera |
| 303 | vehicle sensor |
| 304 | LiDAR |
| 305 | sensor information processing unit |
| 306 | map information processing unit |
| 307 | three-dimensional object maneuver prediction unit |
| 308 | storage unit |
| 309 | residual risk map arithmetic unit |
| 310 | self-localization estimation processing unit |

| M1 | host vehicle |
|----|----|
| M2 | opposing vehicle |
| M3 | following vehicle |

**Claims**

1. A vehicle control device that controls a vehicle capable of transitioning between an autonomous driving mode in which a vehicle system performs at least some or all driving tasks and a manual driving mode in which a driver or a remote supervisor performs the driving tasks, the vehicle control device comprising:

 a recognition unit that recognizes a situation around the vehicle on the basis of a detection result of an external sensor provided to the vehicle;
 a travel trajectory generation unit that generates a travel trajectory from a current position of the vehicle to a target position on the basis of a situation around the vehicle recognized by the recognition unit; and
 a transition-permitting position determination unit that determines a transition-permitting position at which a transition from the autonomous driving mode to the manual driving mode is possible during execution of a driving task in the autonomous driving mode,
 wherein the travel trajectory generation unit generates a first travel trajectory which is a travel trajectory of the vehicle from the current position to the target position and a second travel trajectory which is a travel trajectory from a point on the first travel trajectory to the transition-permitting position, and
 controls the vehicle by using the first travel trajectory or the second travel trajectory.

2. The vehicle control device according to claim 1,
 wherein the first travel trajectory and the second travel trajectory are information on road coordinate positions and do not have information on the times when passage through the coordinate positions takes place.

3. The vehicle control device according to claim 1,

 wherein, in a case where it is determined that continuation of control of the vehicle in the autonomous driving mode is difficult on the first travel trajectory, the vehicle is made to travel to the transition-permitting position by using the second travel trajectory, and
 a transition from the autonomous driving mode to the manual driving mode is performed at the transition-permitting position.

4. The vehicle control device according to claim 1,
 wherein the transition-permitting position determination unit determines, as the transition-permitting position, any one of a start position of a driving task in the autonomous driving mode, a blind spot region of the external sensor, and a position where a degree of travel risk of the vehicle determined by a presence or absence of an obstacle is equal to or less than a threshold value.

5. The vehicle control device according to claim 1,
 wherein the travel trajectory generation unit acquires or estimates a difference between the detection result of the external sensor in a case where the vehicle travels on the first travel trajectory and the detection result of the external sensor in a case where the vehicle travels on the second travel trajectory, and updates the first travel trajectory or the second travel trajectory in a case where the difference is equal to or greater than a threshold value.

6. The vehicle control device according to claim 1,
 wherein, when generating the second travel trajectory, the travel trajectory generation unit obtains an appropriate travel trajectory by correcting a recognition result in light of the difference between the detection results of a plurality of external sensors provided to the vehicle.

7. A vehicle control method for controlling a vehicle capable of transitioning between an autonomous driving mode in which a vehicle system performs at least some or all driving tasks and a manual driving mode in which a driver or a remote supervisor performs the driving tasks, the vehicle control method including:

 recognition processing for recognizing a situation around the vehicle on the basis of a detection result of an external sensor provided to the vehicle;
 travel trajectory generation processing for generating a travel trajectory from a current position of the vehicle to a target position on the basis of a situation around the vehicle recognized by the recognition processing; and transition-permitting position determination processing for determining a transition-permitting position at which a transition from the autonomous driving mode to the manual driving mode is possible during execution of a driving task in the autonomous driving mode,

wherein the travel trajectory generation processing generates a first travel trajectory which is a travel trajectory of the vehicle from the current position to the target position and a second travel trajectory which is a travel trajectory from a point on the first travel trajectory to the transition-permitting position, and controls the vehicle by using the generated first travel trajectory or the generated second travel trajectory.

[FIG. 1]

FIG. 1

[FIG. 2]

FIG. 2

[FIG. 3]

FIG. 3

RM

[FIG. 4]

FIG. 4

```
        ┌──────────────┐
        │    Start     │
        └──────┬───────┘
               ↓
   ┌───────────────────────┐
   │  ACQUIRE VARIOUS      │──── S11
   │  INFORMATION          │
   └───────────┬───────────┘
               ↓
   ┌───────────────────────┐
   │  PREDICT MANEUVER OF  │──── S12
   │  SUBJECT VEHICLE      │
   └───────────┬───────────┘
               ↓
         ◇─────────────────◇
   No    │  IS THERE        │
 ◄───────│  MOVING BODY     │──── S13
         │  WHICH IS        │
         │  SUBJECT TO      │
         │  COOPERATIVE     │
         │  MANEUVER?       │
         ◇─────────────────◇
               │ Yes
               ↓
   ┌───────────────────────┐
   │  GENERATE COOPERATIVE │
   │  MANEUVER PLAN        │──── S14
   │  INFORMATION AND      │
   │  RESIDUAL RISK MAP    │
   └───────────┬───────────┘
               ↓
        ┌──────────────┐
        │     End      │
        └──────────────┘
```

[FIG. 5]

M1

741

731

742

M2

701

*FIG. 5A*

741

731

M1

742

M2

701

*FIG. 5B*

[FIG. 6]

RM     CB     LI     MI     EI     RI     UI

201

**221**
AUTONOMOUS DRIVING PLAN CREATION UNIT

**222**
TRAVEL MODE MANAGEMENT UNIT

CURRENT TRAVEL INFORMATION

TARGET MANEUVER CANDIDATE WEIGHT

**230**

TRAJECTORY PLANNING UNIT

**231**    **232**    **233**    **234**

LK      LC      OA      CO

MANUAL DRIVING REQUEST

LANE-KEEPING TRAJECTORY    LANE CHANGE TRAJECTORY    OBSTACLE AVOIDANCE TRAJECTORY    COOPERATIVE MANEUVER TRAJECTORY

**235**
TRAJECTORY ARBITRATION UNIT

TARGET TRAVEL MODE, TRAJECTORY EVALUATION VALUE

*FIG. 6*

TT

[FIG. 7]

RM          CB          EI          LI          MI

234

| 241 COOPERATIVE MANEUVER STATE MANAGEMENT UNIT | 242 STANDBY POSITION / POSTURE GENERATION UNIT | 244 DRIVING-MODE SWITCH POSITION GENERATION UNIT |

243 COOPERATIVE MANEUVER TRAJECTORY CALCULATION UNIT

245 BACKUP TRAJECTORY GENERATION UNIT

246 COOPERATIVE MANEUVER TRAJECTORY SELECTION UNIT

PT          MD

*FIG. 7*

[FIG. 8]

*FIG. 8*

```
        ┌─────────────┐
        │    Start     │
        └─────────────┘
               │
               ▼
   ┌───────────────────────┐
   │   ACQUIRE VARIOUS      │ ── S21
   │     INFORMATION        │
   └───────────────────────┘
               │
               ▼
   ┌───────────────────────┐
   │ GENERATE REFUGE        │
   │ POSITION CANDIDATES    │
   │ ON BASIS OF RESIDUAL   │ ── S22
   │ (COOPERATIVE)          │
   │ RISK MAP               │
   └───────────────────────┘
               │
               ▼
        ┌─────────────┐
        │     End      │
        └─────────────┘
```

[FIG. 9]

FIG. 9

[FIG. 10]

*FIG. 10*

```
                    ┌─────────────┐
                    │    Start    │
                    └──────┬──────┘
                           │
                           ▼
        ┌──────────────────────────────────────┐
        │   ACQUIRE VARIOUS INFORMATION         │──S31
        └──────────────────┬───────────────────┘
                           │
                           ▼
        ┌──────────────────────────────────────┐
        │ GENERATE ARRIVAL POSITION CANDIDATE   │
        │   FOR CHANGING TRAVEL MODE FROM       │
        │ COOPERATIVE MANEUVER MODE TO          │──S32
        │  ANOTHER MODE AFTER PASSAGE           │
        │    THROUGH REFUGE POSITION            │
        └──────────────────┬───────────────────┘
                           │
                           ▼
        ┌──────────────────────────────────────┐
        │  GENERATE COOPERATIVE MANEUVER        │
        │ TRAJECTORY PLAN CANDIDATE PASSING     │
        │THROUGH REFUGE POSITION CANDIDATE      │──S33
        │   AND END POSITION CANDIDATE          │
        └──────────────────┬───────────────────┘
                           │
                           ▼
        ┌──────────────────────────────────────┐
        │  EVALUATE GENERATED TRAJECTORY        │
        │ CANDIDATES AND SELECT OPTIMAL         │──S34
        │         TRAJECTORY                    │
        └──────────────────┬───────────────────┘
                           │
                           ▼
        ┌──────────────────────────────────────┐
        │  STORE COOPERATIVE MANEUVER           │
        │  TRAJECTORY INFORMATION IN            │──S35
        │       STORAGE UNIT                    │
        └──────────────────┬───────────────────┘
                           │
                           ▼
                    ┌─────────────┐
                    │     End     │
                    └─────────────┘
```

[FIG. 11]

*FIG. 11*

[FIG. 12]

*FIG. 12*

[FIG. 13]

FIG. 13A

FIG. 13B

[FIG. 14]

704  706    702    705

703

M1

M2

*FIG. 14A*

706

712

711

M1

*FIG. 14B*

[FIG. 15]

*FIG. 15*

```
        ┌─────────────┐
        │    Start     │
        └──────┬───────┘
               │
               ▼
    ┌──────────────────────┐
    │   ACQUIRE VARIOUS     │──── S41
    │    INFORMATION        │
    └──────────┬───────────┘
               │
               ▼
    ┌──────────────────────┐
    │ GENERATE DRIVING-MODE │
    │  SWITCH POSITION AT   │──── S42
    │  TIME OF SURRENDERING │
    │       CONTROL         │
    └──────────┬───────────┘
               │
               ▼
        ┌─────────────┐
        │     End      │
        └─────────────┘
```

[FIG. 16]

*FIG. 16*

```
                    ┌──────────────┐
                    │    Start     │
                    └──────┬───────┘
                           │
                           ▼
        ┌──────────────────────────────────┐
        │   ACQUIRE VARIOUS INFORMATION     │───S51
        └──────────────────┬───────────────┘
                           │
                           ▼
        ┌──────────────────────────────────┐
        │   GENERATE BACKUP TRAJECTORY      │
        │   CANDIDATES LEADING TO           │
        │   DRIVING-MODE SWITCH POSITION    │───S52
        │   AT TIME OF SURRENDERING         │
        │   CONTROL                         │
        └──────────────────┬───────────────┘
                           │
                           ▼
        ┌──────────────────────────────────┐
        │   EVALUATE GENERATED BACKUP       │
        │   TRAJECTORY CANDIDATES AND       │───S53
        │   SELECT OPTIMAL TRAJECTORY       │
        └──────────────────┬───────────────┘
                           │
                           ▼
        ┌──────────────────────────────────┐
        │   STORE BACKUP TRAJECTORY         │
        │   INFORMATION IN STORAGE UNIT     │───S54
        └──────────────────┬───────────────┘
                           │
                           ▼
                    ┌──────────────┐
                    │     End      │
                    └──────────────┘
```

[FIG. 17]

*FIG. 17*

[FIG. 18]

FIG. 18A

FIG. 18B

[FIG. 19]

FIG. 19A

FIG. 19B

[FIG. 20]

*FIG. 20A*

*FIG. 20B*

*FIG. 20C*

[FIG. 21]

*FIG. 21A*

*FIG. 21B*

[FIG. 22]

*FIG. 22*

```
                          ┌─────────┐
                          │  Start  │
                          └─────────┘
                               │
                               ▼
              ┌────────────────────────────────────┐
              │   ACQUIRE VARIOUS INFORMATION       │──S61
              └────────────────────────────────────┘
                               │
                               ▼
              ┌────────────────────────────────────┐
              │   EXECUTE NUMERICAL MODELING OF     │──S62
              │   SURROUNDING ENVIRONMENT           │
              └────────────────────────────────────┘
                               │
                               ▼
              ┌────────────────────────────────────┐
              │   EXECUTE PREDICTION OF             │──S63
              │   FUTURE SURRENDER-CONTROL          │
              │   POSITION ON PASSING TRAJECTORY    │
              └────────────────────────────────────┘
                               │
                               ▼
              ┌────────────────────────────────────┐
              │   GENERATE CANDIDATES FOR FUTURE    │
              │   BACKUP TRAJECTORY LEADING FROM    │──S64
              │   FUTURE SURRENDER-CONTROL POSITION │
              │   TO DRIVER SWITCH POSITION         │
              └────────────────────────────────────┘
                               │
                               ▼
              ┌────────────────────────────────────┐
              │   EVALUATE GENERATED FUTURE         │──S65
              │   BACKUP TRAJECTORY CANDIDATES      │
              │   AND SELECT OPTIMAL TRAJECTORY     │
              └────────────────────────────────────┘
                               │
                               ▼
                    ╱──────────────────╲
          No       ╱  FUTURE            ╲
      ◄───────────╱  BACKUP TRAJECTORY   ╲──S66
                  ╲  GENERATED?          ╱
                   ╲────────────────────╱
                          │ Yes
   S68                    │
     │                    ▼
 ┌──────────────┐   ┌──────────────────────┐
 │ REQUEST      │   │ STORE FUTURE BACKUP   │
 │ TRANSITION TO│   │ TRAJECTORY INFORMATION│──S67
 │ MANUAL       │   │ IN STORAGE UNIT       │
 │ DRIVING MODE │   └──────────────────────┘
 └──────────────┘          │
        │                  ▼
        └────────────►  ┌─────────┐
                        │   End   │
                        └─────────┘
```

## INTERNATIONAL SEARCH REPORT

| International application No. |
|---|
| **PCT/JP2023/042059** |

### A. CLASSIFICATION OF SUBJECT MATTER

***B60W 30/10***(2006.01)i; ***B60W 30/182***(2020.01)i; ***B60W 40/04***(2006.01)i; ***B60W 60/00***(2020.01)i; ***G01C 21/34***(2006.01)i;
***G08G 1/16***(2006.01)i
FI:    B60W30/10; B60W30/182; B60W40/04; B60W60/00; G08G1/16 C; G01C21/34

According to International Patent Classification (IPC) or to both national classification and IPC

### B. FIELDS SEARCHED

Minimum documentation searched (classification system followed by classification symbols)

B60W30/00-60/00; G01C21/34; G08G1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/021340 A1 (HITACHI AUTOMOTIVE SYSTEMS, LTD.) 11 February 2016 (2016-02-11)<br>paragraphs [0012]-[0068], [0096]-[0098] | 1-4, 7 |
| Y | | 6 |
| A | | 5 |
| Y | WO 2019/142563 A1 (HITACHI AUTOMOTIVE SYSTEMS, LTD.) 25 July 2019 (2019-07-25)<br>paragraphs [0007], [0008], [0023], [0024] | 6 |
| A | JP 2017-182463 A (PIONEER CORPORATION) 05 October 2017 (2017-10-05)<br>paragraphs [0019], [0025]-[0029] | 1-7 |
| A | JP 2020-052673 A (NISSAN MOTOR CO., LTD.) 02 April 2020 (2020-04-02)<br>paragraphs [0089]-[0105], fig. 3-5 | 1-7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/042059**

| Patent document cited in search report | | | Publication date (day/month/year) | Patent family member(s) | | | Publication date (day/month/year) |
|---|---|---|---|---|---|---|---|
| WO | 2016/021340 | A1 | 11 February 2016 | CN | 106470885 | A | |
| | | | | EP | 3178715 | A1 | |
| | | | | JP | 2016-037149 | A | |
| | | | | US | 2017/0212513 | A1 | |
| | | | | paragraphs [0031]-[0104], [0132]-[0134] | | | |
| WO | 2019/142563 | A1 | 25 July 2019 | DE | 112018005858 | T5 | |
| | | | | JP | 2019-128639 | A | |
| | | | | US | 2021/0053580 | A1 | |
| | | | | paragraphs [0007], [0008], [0029], [0030] | | | |
| JP | 2017-182463 | A | 05 October 2017 | (Family: none) | | | |
| JP | 2020-052673 | A | 02 April 2020 | (Family: none) | | | |

Form PCT/ISA/210 (patent family annex) (July 2022)

**EP 4 647 310 A1**

**REFERENCES CITED IN THE DESCRIPTION**

**Patent documents cited in the description**

- JP 2018151177 A